# EUROPEAN PATENT APPLICATION

(11) **EP 4 316 953 A1**
(43) Date of publication of application: **07.02.2024**
(21) Application number: 22816243.4
(22) Date of filing: 06.06.2022
(51) Int. Cl.: B62D 25/10, B62D 25/06, F16B 5/08

(54) **AUTOMOBILE PANEL AND METHOD FOR MANUFACTURING SAME**

(30) Priority: 04.06.2021 JP 2021094021; 28.10.2021 JP 2021176012
(71) Applicant: NIPPON STEEL CORPORATION, Chiyoda-ku Tokyo 100-8071 (JP)
(72) Inventor: NISHIMURA, Ryuichi, Tokyo 100-8071 (JP); SAWA, Yasunori, Tokyo 100-8071 (JP); HAMADA, Koichi, Tokyo 100-8071 (JP)
(74) Representative: Zimmermann & Partner Patentanwälte mbB
(86) International application number: PCT/JP2022/022800
(87) International publication number: WO 2022/255498

(57) **Abstract**

An automobile hood 1 has joints 20 that join an inner panel 2 and an outer panel 3. The inner panel 2 includes, for example, units 8 and 9 arranged in plurality in an aligned relationship in a cross direction X and arranged in plurality in an aligned relationship in a longitudinal direction Y. The plurality of units 8 and 9 include a plurality of joint-equipped units in which the joint 20 is provided. A predetermined first form or second form is provided in the automobile hood 1. In the first form, in some of the joint-equipped units, namely, joint-equipped units 84, 89, and 9, the joints 20 are arranged in an arrangement including a predetermined pattern P1, and in the remaining joint-equipped units 81, 85, 86, 810, 811, and 812, the joints 20 are arranged in an arrangement including a part of the predetermined pattern P1. In the second form, in each of the joint-equipped units 8 and 9, a plurality of the joints 20 are arranged in an arrangement including the predetermined pattern P 1.

## Description

### TECHNICAL FIELD

The present invention relates to an automobile panel and a method for producing the automobile panel.

### BACKGROUND ART

Patent Document 1 discloses a hood panel for a vehicle. The principle purpose of the hood panel is to reduce the degree of injury to a pedestrian if the pedestrian collides with the hood panel.

Patent Document 2 discloses a hood for an automobile as exterior equipment for an automobile. The principle purpose of the hood for an automobile is to absorb the energy of contact when a pedestrian comes into contact with the hood for an automobile, by only deforming by a small amount in the inward direction of the automobile.

### LIST OF PRIOR ART DOCUMENTS

### PATENT DOCUMENTS

Patent Document 1: JP2005-193863A
Patent Document 2: JP2017-1553A

### SUMMARY OF INVENTION

### TECHNICAL PROBLEM

In the automobile hood disclosed in Patent Document 1, an inner panel and an outer panel are joined using an adhesive. Mastic sealers and the like are known as adhesives for joining an inner panel and an outer panel. When assembling an automobile hood, for example, a mastic sealer is applied to the outer panel, and next, by superposing the inner panel and the outer panel on each other, the mastic sealer is sandwiched between the inner panel and the outer panel. By this means, the inner panel and the outer panel are joined to each other through the mastic sealer.

The operation for applying the mastic sealer to the outer panel is performed, for example, by a robot arm that holds a nozzle to which the sealer is supplied. The time taken to apply sealer to one automobile panel is sometimes referred to as the "cycle time". Shortening the cycle time is preferable from the viewpoint of increasing the production efficiency with respect to the automobile hoods.

A similar problem also exists with respect to other automobile panels having a structure joined using a sealer, for example, the structures of back doors, side doors, and roofs. That is, the above problem is present in a structure that has an outer skin panel, and an inner panel that is joined to the outer skin panel with a sealer. Note that, here, in addition to what is generally called an "inner panel" (inner sheet member), it will be assumed that the term "inner panel" also includes stiffeners and reinforcing members.

On the other hand, in Patent Document 1 and Patent Document 2, there is no particular disclosure regarding a configuration for efficiently applying an adhesive such as a mastic sealer.

One objective of the present invention is to provide an automobile panel that can be efficiently produced, and a method for producing the automobile panel.

### SOLUTION TO PROBLEM

The gist of the present invention is an automobile panel and a method for producing the automobile panel which are described hereunder.

(1) An automobile panel, including:
   an outer panel,
   an inner panel, and
   a j oint that joins the inner panel and the outer panel;
   wherein:
      the inner panel includes units which, as viewed in a sheet thickness direction of the outer panel, are arranged in plurality in an aligned relationship in a predetermined first direction and are arranged in plurality in an aligned relationship in a second direction that intersects the first direction;
      each of the units includes a flange which is arranged adjacent to the outer panel, an inclined wall that extends from the flange so as to separate from the outer panel, and a bottom portion that is continuous with the inclined wall and is separated from the flange;
      the plurality of units include a plurality of j oint-equipped units in which the joint is provided at the flange;
      a predetermined first form or second form is provided;
      in the first form, in some of the j oint-equipped units the joints are arranged in an arrangement including a predetermined pattern, and in a remainder of the j oint-equipped units the joints are arranged in an arrangement including a part of the predetermined pattern; and
      in the second form, in each of the joint-equipped units, a plurality of the joints are arranged in an arrangement including the predetermined pattern.
(2) The automobile panel according to the above (1), wherein the plurality of units include a plurality of units including the flanges which have an identical or similar shape to each other.
(3) The automobile panel according to the above (1) or the above (2), wherein the predetermined pattern is set to a same size in each of a plurality of the j oint-equipped units.
(4) The automobile panel according to any one of the above (1) to the above (3), wherein:
   in the first form, at least one of a part of the predetermined pattern and the predetermined pattern is arranged in an aligned relationship in a rectilinear direction; and
   in the second form, the predetermined pattern is arranged in an aligned relationship in the rectilinear direction.
(5) The automobile panel according to any one of the above (1) to the above (4), wherein:
   the rectilinear direction is at least one of the first direction, the second direction, and a third direction that intersects with both of the first direction and the second direction.
(6) The automobile panel according to any one of the above (1) to the above (5), wherein:
   as the joint-equipped unit, an additional-joint-equipped unit having, in addition to one part of the predetermined pattern or the predetermined pattern, the joint that is arranged at a place that deviates from a layout of the joints in the predetermined pattern is provided.
(7) The automobile panel according to any one of the above (1) to the above (6), wherein the predetermined pattern is a dotted pattern having three or more dots.
(8) The automobile panel according to any one of the above (1) to the above (6), wherein the predetermined pattern is a linear pattern having three or more lines.
(9) The automobile panel according to any one of the above (1) to the above (8), wherein 15 or more of the predetermined patterns are provided.
(10) The automobile panel according to any one of the above (1) to the above (9), wherein:
   the j oint-equipped units include an annular unit with joints in which the joint is provided at the flange which is formed in an annular shape as viewed in the sheet thickness direction;
   the annular unit with joints is provided in plurality; and
   a distance between centers as viewed in the sheet thickness direction of two of the annular units with joints that are adjacent to each other is 200 mm or less.
(11) The automobile panel according to any one of the above (1) to the above (10), wherein:
   the outer panel is a steel sheet having a sheet thickness of 0.60 mm or less and an ultimate yield stress of 400 MPa or more, and
   the inner panel is a steel sheet having a sheet thickness of 0.50 mm or less.
(12) The automobile panel according to any one of the above (1) to the above (10), wherein:
   the outer panel is an aluminum sheet having a sheet thickness of 0.75 mm or less, and
   the inner panel is an aluminum sheet having a sheet thickness of 0.75 mm or less.
(13) A method for producing an automobile panel, including:
   when applying an adhesive to serve as a joint for joining an outer panel and an inner panel to an application target including at least one of the outer panel and the inner panel, applying the adhesive to the application target using an applicator including a plurality of nozzles arranged in an arrangement including at least one part of a predetermined pattern;
   the plurality of nozzles being configured to be individually capable of switching supply of the adhesive on and off, and
   applying the adhesive in an arrangement including at least one part of the predetermined pattern to the application target by supplying the adhesive from all of the nozzles simultaneously, or applying the adhesive in an arrangement that is one part of the predetermined pattern to the application target by supplying the adhesive from a part of the nozzles.
(14) The method for producing an automobile panel according to the above (13), including:
   applying the adhesive to a plurality of places on the application target while causing the plurality of nozzles to reciprocate with respect to the application target.
(15) The method for producing an automobile panel according to the above (13) or the above (14), wherein:
   the adhesive is applied in a state in which relative positions of the plurality of nozzles are fixed.
(16) The method for producing an automobile panel according to any one of the above (13) to the above (15), including:
   applying the adhesive while moving the plurality of nozzles in a rectilinear direction.
(17) The method for producing an automobile panel according to the above (16), wherein:
   the inner panel includes units which are arranged in plurality in an aligned relationship in a predetermined first direction as viewed in a sheet thickness direction of the outer panel and which are arranged in plurality in an aligned relationship in a second direction that intersects with the first direction; and
   the rectilinear direction is at least one of the first direction, the second direction, and a third direction that intersects with both of the first direction and the second direction.
(18) The method for producing an automobile panel according to any one of the above (13) to the above (17), including:
   in a process that is prior to or a process that is after an application process in which the adhesive is applied in an arrangement including at least one part of the predetermined pattern to the application target by supplying the adhesive from all of the nozzles simultaneously or the adhesive is applied in an arrangement that is one part of the predetermined pattern to the application target by supplying the adhesive from a part of the nozzles, applying the adhesive at a place that deviates from a layout of the adhesive in the predetermined pattern.
(19) The method for producing an automobile panel according to any one of the above (13) to the above (18), wherein:
   the adhesive is supplied to the application target while moving a plurality of the nozzles by an interval that is shorter than an interval between a plurality of the nozzles.

### ADVANTAGEOUS EFFECT OF INVENTION

According to the present invention, an automobile panel can be efficiently produced.

### BRIEF DESCRIPTION OF DRAWINGS

[Figure 1] Figure 1 is a schematic exploded perspective view of an automobile hood according to one embodiment of the present invention, in which diagrammatic representation of a joint is omitted.
[Figure 2] Figure 2 is a plan view of an inner panel of the automobile hood.
[Figure 3] Figure 3 is a schematic cross-sectional view along a line III-III in Figure 2.
[Figure 4] Figure 4 is a cross-sectional view along a line IV-IV in Figure 2, in which illustration of a portion that appears to the rear of the cross section is omitted.
[Figure 5] Figure 5 is a view in which one part of Figure 3 is enlarged.
[Figure 6] Figure 6 is a plan view illustrating one unit in an enlarged manner.
[Figure 7] Figure 7 is an enlarged view of an overhanging structure illustrated in Figure 2.
[Figure 8] Figure 8A is a schematic diagram of one example of an applicator. Figure 8B is a schematic diagram of another example of an applicator.
[Figure 9] Figure 9 is a schematic plan view for describing the manner in which an applicator applies an adhesive.
[Figure 10] Figure 10 is a view for describing a first modification of a first embodiment.
[Figure 11] Figure 11 is a view for describing a second modification of the first embodiment.
[Figure 12] Figure 12 is a view for describing a third modification of the first embodiment.
[Figure 13] Figure 13 is a view for describing an arrangement of joints pertaining to a second embodiment.
[Figure 14] Figure 14 is a schematic plan view for describing the manner in which an applicator applies an adhesive in the second embodiment.
[Figure 15] Figure 15 is a view for describing a first modification of the second embodiment.
[Figure 16] Figure 16 is a view for describing a second modification of the second embodiment.
[Figure 17] Figure 17 is a view for describing a third modification of the second embodiment.
[Figure 18] Figure 18 is a view for describing an arrangement of joints pertaining to a third embodiment.
[Figure 19] Figure 19 is a schematic plan view for describing the manner in which an applicator applies an adhesive in the third embodiment.
[Figure 20] Figure 20 is a view for describing a first modification of the third embodiment.
[Figure 21] Figure 21 is a view for describing a second modification of the third embodiment.
[Figure 22] Figure 22 is a view for describing a third modification of the third embodiment.
[Figure 23] Figure 23A is a schematic plan view of an inner panel illustrating a principal part of a first modification of a unit. Figure 23B is a plan view illustrating a principal part of Figure 23A. Figure 23C is a cross-sectional view along a line XXIIIC-XXIIIC in Figure 23B.
[Figure 24] Figure 24A is a view for describing a different example of the first modification of the unit. Figure 24B is a view for describing a further different example of the first modification of the unit.
[Figure 25] Figure 25A is a schematic plan view illustrating a principal part of a second modification of a unit. Figure 25B is a cross-sectional view along a line XXVB-XXVB in Figure 25A.
[Figure 26] Figure 26 is a view illustrating a different example of the second modification of the unit.

### DESCRIPTION OF EMBODIMENTS

Hereunder, first, the circumstances leading to the conception of the present invention will be described, and then embodiments will be described in detail.

### [Circumstances leading to conception of present invention]

Generally, in an automobile panel, the outer panel is a comparatively flat shape, while on the other hand the inner panel is a shape having unevenness. Further, a sealer (adhesive) such as a mastic sealer is applied at places on the inner panel that are convex toward the outer panel side. The sealer contacts the inner panel and the outer panel, and joins these panels together. Further, in the automobile hood, the height (thickness) in the vehicle height direction is less than the length in the vehicle length direction and the length in the vehicle cross direction of the automobile. Therefore, when applying the sealer to the outer panel or inner panel when assembling the automobile hood, the amount of movement of a nozzle for applying the sealer in the directions (vehicle length direction and vehicle cross direction) that are perpendicular to the thickness direction of the automobile hood influences the time taken to perform the sealer application operation. Hence, the present inventors focused their attention on shortening the cycle time by devising a suitable configuration and suitable operations of nozzles for applying sealer during production of one automobile panel. Note that, in the present embodiment, the term "cycle time" refers to the operation time that is required to apply a sealer which will serve as joints for joining an outer panel and an inner panel to each other when producing one automobile panel.

However, there is a possibility that shortening the cycle time by simply reducing the amount of sealer in one automobile panel will cause a different problem. Specifically, due to the demands to reduce the weight of automobiles, there is a demand to increase the strength of automobile panels and also make the automobile panels thinner. However, when the sheet thickness of an automobile panel is made thinner, the panel rigidity and the dent resistance of the automobile panel decrease. Further, if the regions in which sealer that joins the inner panel and outer panel is arranged are reduced, although the cycle time can be shortened, the panel rigidity and the dent resistance of the automobile panel will decrease. Thus, it is not easy to achieve a reduction in the weight of an automobile by making the walls of an automobile panel thinner, and improve the panel rigidity and the dent resistance of the automobile panel while also shortening the cycle time.

Note that, the term "panel rigidity" refers to, in a case where a force from outside acts on a press-formed product which has a comparatively moderately curving surface and in which the surface area is extremely large relative to the sheet thickness, for example, a panel on the outer side of an automobile hood, the rigidity of the relevant panel. The panel rigidity corresponds to a feeling of elastic resistance or a sensation of deflection deformation when the panel is pressed with a hand. This characteristic is usually represented by the deflection when a load is applied, and the smaller that the deflection is when a constant load is applied, the higher that the panel rigidity is.

Further, the term "dent resistance" refers to the difficulty for an indentation (dent mark) to be left after removing the load in a case where a localized load is applied to a panel for some reason. In the case of the body of an actual automobile, a dent mark occurs when an outside panel of a door or the like is strongly pressed with a finger or the palm of a hand, or when the automobile body is hit by a flying stone while travelling and the like. A dent mark occurs as a result of a place on a panel at which a load has been applied plastically deforming. Therefore, when the strain on a panel at a time that a load is applied to the panel reaches a certain magnitude, the strain remains even after the load is removed, and a dent mark occurs. The minimum value of a load that generates a certain residual strain in a panel is referred to as the "dent load", and the larger the dent load is, the better the dent resistance is.

Based on the above background, the inventors of the present application conducted intensive research, and as a result arrived at the idea that if a plurality of nozzles for applying a sealer are used simultaneously, even if the paths of the nozzles for applying the sealer are the same, in comparison to a case where the number of nozzles is one, in a unit of time it will be possible to apply sealer to places of a number obtained by multiplying by the number of nozzles. More specifically, normally, even when an applicator that is capable of applying a sealer at a relatively high speed is used, the applicator can only apply the sealer at about two places per second. On the other hand, as a result of intensive research, the inventors of the present application arrived at the idea that if a plurality of nozzles for application are used simultaneously, by fixing the relative positions of these nozzles in the same pattern, in one second it is possible to apply a sealer at a number of places that is equal to a number obtained by multiplying the number of nozzles by two. That is, for example, if three nozzles are arranged at positions corresponding to the vertices of an equilateral triangle, it is possible to apply a sealer in a dotted shape that corresponds to the three vertices of the equilateral triangle shape with a single application. The inventors of the present application arrived at the idea that by doing so, for example, when using an apparatus that is capable of high-speed application as described above, it is possible to apply a sealer at 60 places in equilateral triangle shapes (corresponds to 20 equilateral triangles) in around a little more than 10 seconds. In addition, the inventors of the present application arrived at the idea that by using a plurality of nozzles for application, the sealer can be arranged in a well-balanced manner at a large number of places, and the panel rigidity and the dent resistance can be improved, and thereby arrived at the invention of the present application. Hereunder, an example of the present invention is specifically described.

### [Description of Embodiment]

Hereunder, an embodiment of the present invention is described while referring to the accompanying drawings. Note that, in the present embodiment, an automobile hood is described as one example of an automobile panel. However, the present invention can be applied to any automobile panel as long as the automobile panel has an outer panel, an inner panel, and a joint that joins the inner panel and the outer panel to each other. Examples of such kinds of automobile panels that can be mentioned include a door panel such as a panel for a side door or a back door, a roof panel including a roof outer panel, a fender panel, and a quarter panel.

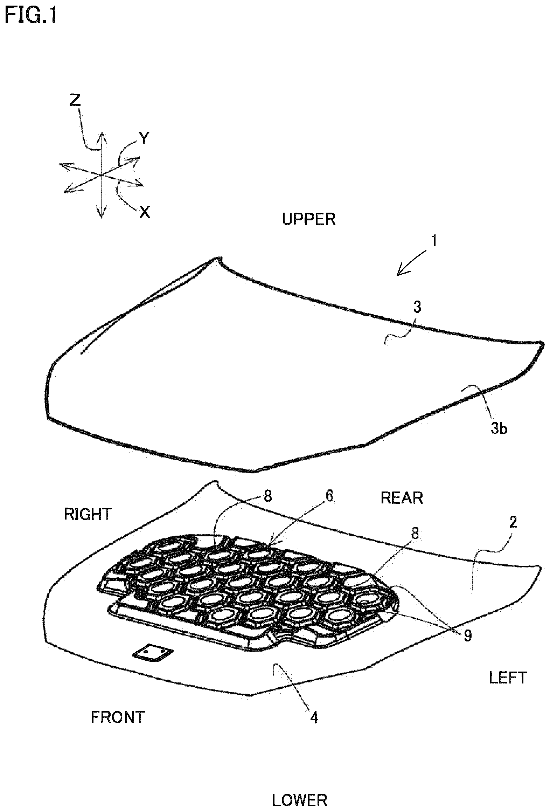

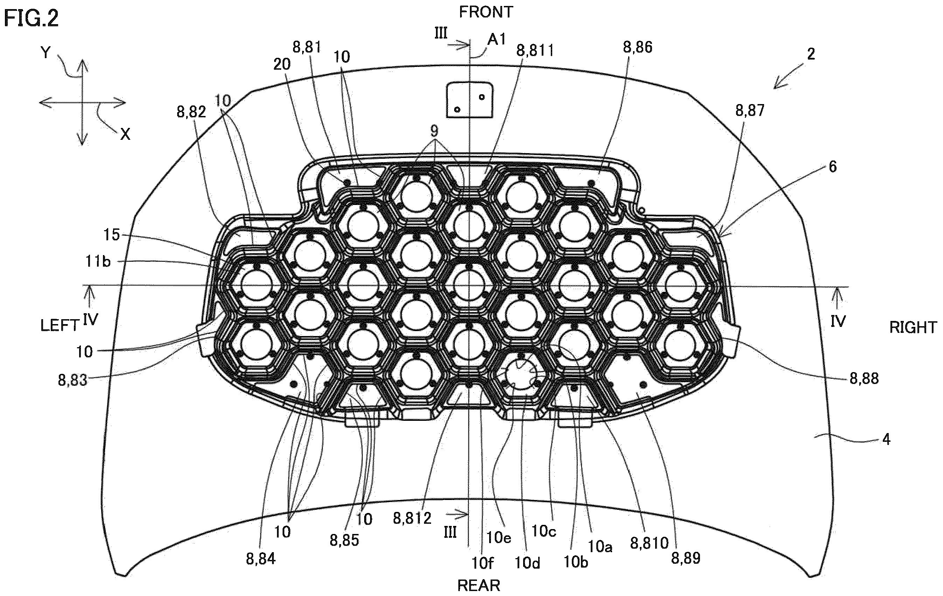

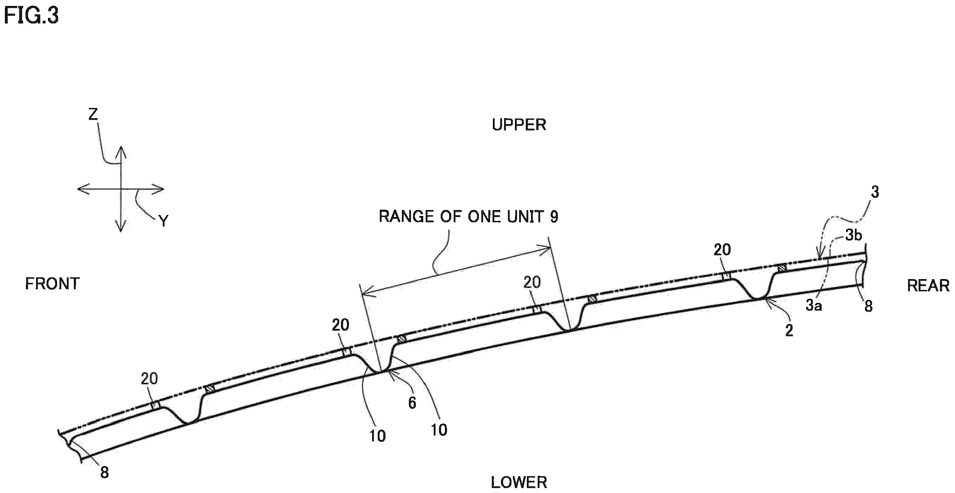

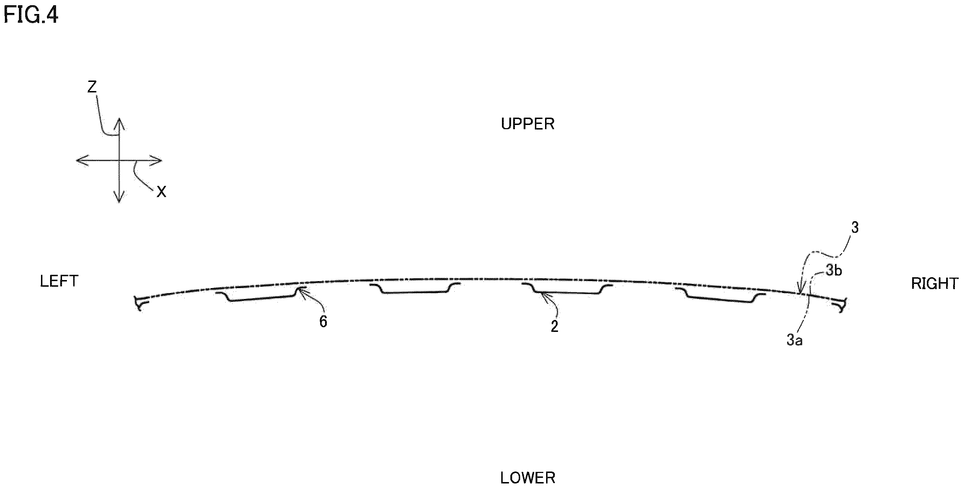

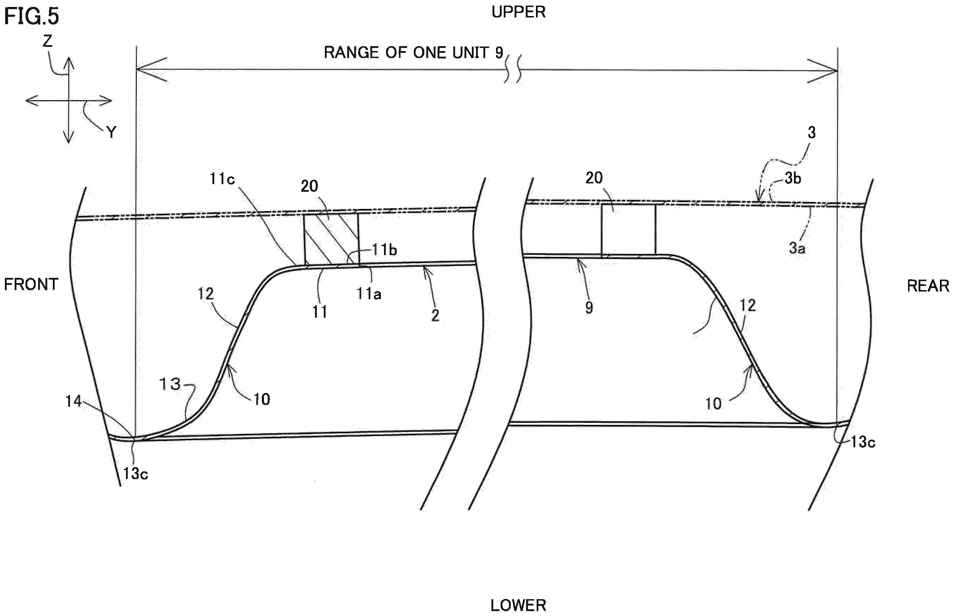

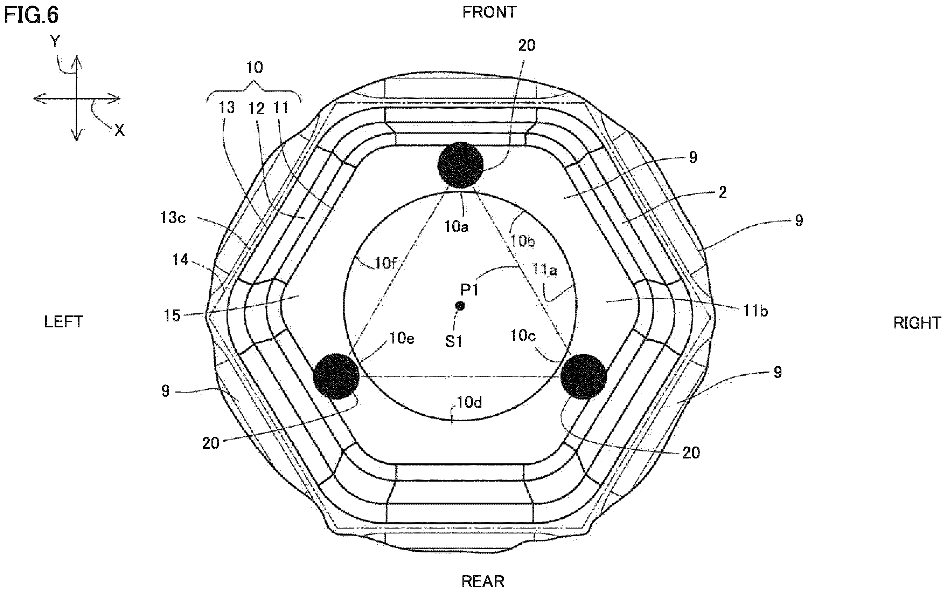

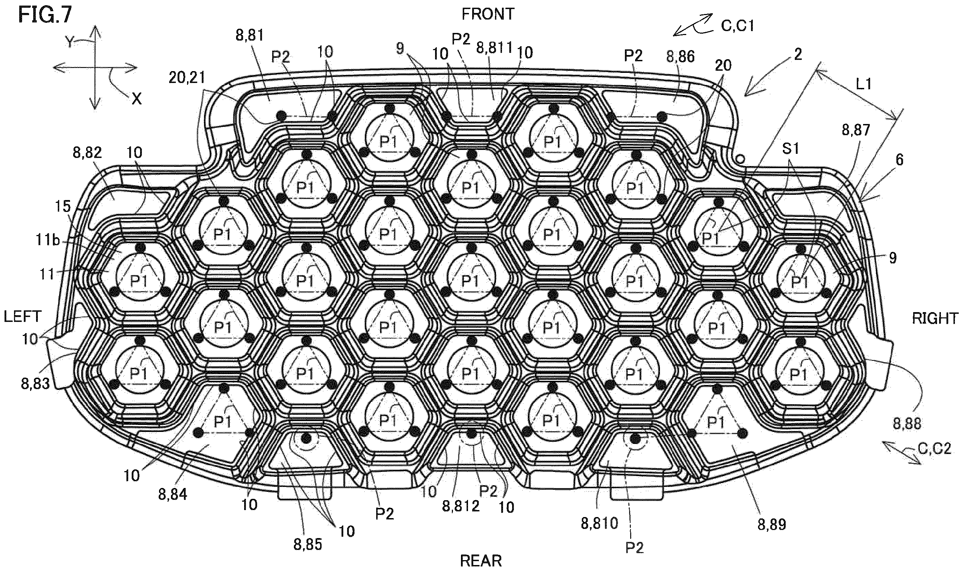

Figure 1 is a schematic exploded perspective view of an automobile hood 1 according to one embodiment of the present invention, in which diagrammatic representation of a joint 20 is omitted. Figure 2 is a plan view of an inner panel 2 of the automobile hood 1. Figure 3 is a schematic cross-sectional view along a line III-III in Figure 2. Figure 4 is a cross-sectional view along a line IV-IV in Figure 2, in which illustration of a portion that appears to the rear of the cross section is omitted. Note that, in Figure 3 and Figure 4, an outer panel 3 that does not appear in Figure 2 is indicated by a chain double-dashed line that is a virtual line. Figure 5 is a view in which one part of Figure 3 is enlarged. Figure 6 is a plan view illustrating one unit 9 in an enlarged manner. Figure 7 is an enlarged view of an overhanging structure 6 illustrated in Figure 2. Hereinafter, unless otherwise specified, the embodiment will be described with reference to Figure 1 to Figure 7 as appropriate.

The automobile hood 1 is a front hood that is provided at the front part of an automobile, and is also called a "bonnet". An automobile in which the automobile hood 1 is provided is, for example, a passenger vehicle. A sedan-type passenger vehicle, a coupe-type passenger vehicle, a hatchback-type passenger vehicle, a minivan-type passenger vehicle, an SUV (Sport Utility Vehicle) type passenger vehicle and the like can be mentioned as examples of the passenger vehicle.

Note that, in the present description, the terms "front", "rear", "left", "right", and "upper" and "lower" are used taking a time when the automobile hood 1 is mounted to an automobile and the automobile hood 1 is closed as the basis. The term "front" refers to the direction in which the automobile advances. The term "rear" refers to the direction in which the automobile reverses. The term "right" refers to the turning direction of the automobile when the automobile which is advancing turns to the right. The term "left" refers to the turning direction of the automobile when the automobile which is advancing turns to the left. Further, in the present embodiment, the vehicle cross direction of the automobile to which the automobile hood 1 is mounted is referred to as "cross direction X". Further, the vehicle length direction of the automobile to which the automobile hood 1 is mounted is referred to as "longitudinal direction Y". Furthermore, the vehicle height direction of the automobile to which the automobile hood 1 is mounted is referred to as "height direction Z".

The automobile hood 1 has an inner panel 2, an outer panel 3 that is supported by the inner panel 2, and joints 20 which are provided between the inner panel 2 and the outer panel 3 and which come in contact with the outer panel 3 and the inner panel 2 to thereby join the panels 2 and 3 to each other.

In the automobile hood 1, the outer panel 3 is a portion that constitutes a part of the outer surface of the automobile. The outer panel 3 is formed of, for example, a metal material such as a mild steel sheet or a high-tensile strength steel sheet. Examples of the high-tensile strength steel sheet that can be mentioned include steel sheets having a tensile strength of 340 MPa or more, for example, a steel sheet having a tensile strength of 440 MPa or more. The outer panel 3 is formed, for example, by subjecting a single steel sheet to press working or the like. The sheet thickness of the outer panel 3 is, for example, 0.25 mm to 1.20 mm, and preferably is 0.6 to 0.7 mm. The outer panel 3 may be an aluminum alloy sheet. In a case where the outer panel 3 is an aluminum alloy sheet, the sheet thickness of the outer panel 3 is 0.40 to 1.20 mm, and preferably is 0.8 to 1.0 mm. There are no particular restrictions with regard to the shape of the outer panel 3.

The inner panel 2 stiffens the outer panel 3 by being joined to an undersurface 3a of the outer panel 3 using the joints 20. By this means, the inner panel 2 increases the panel rigidity of the outer panel 3. The inner panel 2 is formed, for example, of a metal material such as a mild steel sheet or a high-tensile strength steel sheet. The inner panel 2 is formed, for example, by subjecting a single steel sheet to press working. The inner panel 2 may be an integrally formed product, or may be formed by joining a plurality of members together. In the present embodiment, the inner panel 2 is an integrally formed product. The sheet thickness (thickness of the steel sheet) of the inner panel 2 is for example, 0.25 mm to 1.20 mm, and preferably is 0.55 mm to 0.60 mm. The sheet thickness of the inner panel 2 may be less than the sheet thickness of the outer panel 3, may be the same as the sheet thickness of the outer panel 3, or may be greater than the sheet thickness of the outer panel 3. Note that, the inner panel 2 may be an aluminum alloy sheet. In a case where the inner panel 2 is an aluminum alloy sheet, the sheet thickness of the inner panel 2 is 0.40 mm to 1.20 mm, and preferably is about 0.8 mm.

Note that, with regard to the inner panel 2 and the outer panel 3, as a more preferable configuration, the outer panel 3 is a steel sheet having a sheet thickness of 0.25 mm to 0.60 mm (0.60 mm or less) and an ultimate yield stress of 400 MPa or more, and the inner panel 2 is a steel sheet having a sheet thickness of 0.25 to 0.50 mm (0.50 mm or less). According to this configuration, the panel rigidity and the dent resistance of the outer panel 3 can be further increased while also achieving an increase in strength and a reduction in weight with respect to the automobile hood 1.

Further, with regard to the inner panel 2, as a further preferable configuration, the inner panel 2 is a steel sheet having a sheet thickness of 0.25 mm to 0.50 mm, and as a still further preferable configuration, the inner panel 2 is a steel sheet having a sheet thickness of 0.25 to 0.45 mm. According to this configuration, the panel rigidity and the dent resistance of the outer panel 3 can be sufficiently secured while achieving an even greater reduction in the weight of the automobile hood 1.

On the other hand, as a preferable configuration in a case where the inner panel 2 and the outer panel 3 are both aluminum sheets, the sheet thickness of the outer panel 3 is 0.40 to 0.75 mm (0.75 mm or less), and the sheet thickness of the inner panel 2 is 0.40 to 0.75 mm (0.75 mm or less). According to this configuration, the panel rigidity and the dent resistance of the outer panel 3 can be sufficiently secured while achieving an even greater reduction in the weight of the automobile hood 1.

The inner panel 2 has an outer circumferential portion 4, and an overhanging structure 6 arranged so as to be surrounded by the outer circumferential portion 4.

The outer circumferential portion 4 is an outer circumferential part of the inner panel 2. When the outer panel 3 closes the engine room, a part in the vicinity of the outer circumferential portion 4 of the inner panel 2 is received by the automobile body (not illustrated). By this means, a load that acts on an upper face 3b of the outer panel 3 is received by the automobile body through the inner panel 2. The outer circumferential portion 4 is a portion that is formed at an outer circumferential part of the inner panel 2. The overhanging structure 6 is arranged so as to be surrounded by the outer circumferential portion 4.

The overhanging structure 6 has a three-dimensional structure which is provided in order to receive a load acting on the upper face 3b of the outer panel 3. The overhanging structure 6 has a configuration in which members that have a hat-shaped cross section (a V-shaped cross section or a U-shaped cross section) are combined.

The overhanging structure 6 has a plurality of incomplete units 8 which are adjacent to the outer circumferential portion 4 and are continuous with the outer circumferential portion 4, and a plurality of units 9.

The units 9 adjacent to the outer circumferential portion 4 of the inner panel 2 are connected to the outer circumferential portion 4 directly or through the incomplete units 8. The incomplete units 8 and the units 9 are arranged in plurality in an aligned relationship on a straight line along the cross direction X (first direction) as viewed in a sheet thickness direction of the outer panel 3 and also arranged in plurality in an aligned relationship on a straight line along the longitudinal direction Y (second direction) that perpendicular to the cross direction X. Note that, it suffices that the incomplete units 8 and the units 9 are arranged in plurality in an aligned relationship in each of the two directions (first direction and second direction) which intersect with each other as viewed in the sheet thickness direction of the outer panel 3. Further, the first direction and the second direction are not limited to the cross direction X and the longitudinal direction Y.

The incomplete unit 8 has a configuration equivalent to a configuration in which one portion of the unit 9 has been cut off along the circumferential direction of the polygonal (in the present embodiment, hexagonal) unit 9. The incomplete unit 8 has a sub-unit 10 that is similar to a sub-unit 10 of the unit 9 that is described later. A more detailed configuration of the incomplete unit 8 is described later.

Each unit 9 is formed in a polygonal (in the present embodiment, hexagonal) annular shape in plan view in the height direction Z (as viewed in the sheet thickness direction of the outer panel 3). Hereinafter, when simply the term "plan view" is used, it means a plan view in the height direction Z. By forming each unit 9 in a small polygonal shape that is annular, the inner panel 2 can be made lightweight and the inner panel 2 can also be provided with high rigidity.

In the present embodiment, each unit 9 is formed in the shape of a substantially regular hexagon with rounded corners. The term "regular hexagon" means a hexagon in which the lengths of the respective sides are all equal and the interior angles are also a constant angle of 120 degrees. Further, in the present description, the term "substantially regular hexagon" refers to a hexagon that can be treated as a regular hexagon. The respective units 9 are formed so that each unit 9 has the same shape. Note that, in the present embodiment, the meaning of the phrase "same shape" includes not only an identical shape, but also includes a shape which is the same except in the respect that the shape of each unit 9 is made to match a shape matching the curved shape of the outer panel 3.

Each unit 9 may also be formed in the shape of a hexagon that is other than a regular hexagon. Examples of a hexagon other than a regular hexagon that can be mentioned include a hexagon in which the lengths of the respective sides are not uniform, and a hexagon in which the interior angles are not made uniform at 120 degrees. Examples of a hexagon in which the lengths of the respective sides are not uniform that can be mentioned include a hexagon in which the length of a front end side and the length of a rear end side are set to a predetermined first length, and which has four sides whose lengths are each set to a predetermined second length that is different from the first length.

The overhanging structure 6 has a structure in which a plurality of the units 9 having a hexagonal annular shape are disposed in a close packed arrangement. In this case, the term "close packed" means that a plurality of the units 9 that are adjacent to each other are arranged without a gap therebetween. Specifically, each unit 9 is partitioned off from the other units 9 by unit boundaries 14. As illustrated in Figure 5 and Figure 6, a front end 13c (lower end) of a bottom portion 13 forms a boundary of the bottom portion 13 that includes the front end 13c, to thereby form the unit boundary 14. The unit boundary 14 is formed in a hexagonal shape in plan view. By having such a structure in which the units 9 are disposed in a close packed hexagonal arrangement, the overhanging structure 6 can withstand loads in substantially the same manner from all directions including the height direction Z over the whole area in plan view.

In a case where flanges 11, described later, of the units 9 are disposed in a close packed arrangement, preferably a plurality of the units 9 are the same shape. Further, the units 9 that have different or similar shapes may be disposed in a close packed arrangement. Note that, in the overhanging structure 6, the units 9 need not be disposed in a close packed arrangement, and another portion may be formed between the units 9 and 9 that are adjacent. Further, a plurality of the units 9 may have similar shapes to each other. In such a case, in the units 9 that have similar shapes to each other, the flanges 11 of the respective units 9 also have similar shapes to each other.

In the present embodiment, a plurality of the units 9 are formed symmetrically in the cross direction X as a whole. For example, in the present embodiment, three of the units 9 are arranged side by side in the front-to-rear direction at the center in the cross direction X. Note that, there is no restriction on the direction of the units 9.

In the present embodiment, in the direction toward the right side from the aforementioned three units 9 arranged at the central position in the cross direction X are provided, in the following order, four units 9 which are arranged side by side in the longitudinal direction Y, a further three units 9 which are arranged side by side in the longitudinal direction Y, a further two units 9 which are arranged side by side in the longitudinal direction Y, and a further two units 9 which are arranged side by side in the longitudinal direction Y. Furthermore, similarly to the foregoing arrangement, in the direction toward the left side from the aforementioned three units 9 arranged at the central position in the cross direction X are provided, in the following order, four units 9 which are arranged side by side in the longitudinal direction Y, a further three units 9 which are arranged side by side in the longitudinal direction Y, a further two units 9 which are arranged side by side in the longitudinal direction Y, and a further two units 9 which are arranged side by side in the longitudinal direction Y. Thus, the units 9 having substantially the same shape are arranged in plurality on a straight line in each of the longitudinal direction Y (front-rear direction) and the cross direction X.

According to the configuration described above, a plurality of units 9 whose positions are aligned in the cross direction X are arranged at a constant pitch in the cross direction X, and in addition a plurality of units 9 whose positions are aligned in the longitudinal direction Y are arranged at a constant pitch in the longitudinal direction Y. Further, in the present embodiment, units 9 and incomplete units 8 are arranged on a straight line along an oblique direction C (C1 or C2) as a third direction (rectilinear direction) that is intersect with both the cross direction X as a first direction and the longitudinal direction Y as a second direction. An angle (minor angle) formed by the oblique direction C with respect to the cross direction X is, for example, about 30 degrees. The oblique direction C1 is at an angle of -30 degrees in the clockwise direction with respect to the cross direction X, and the oblique direction C2 is at an angle of 30 degrees in the clockwise direction with respect to the cross direction X. This angle (minor angle) is not particularly limited. It can be said that, in the present embodiment, the plurality of units 9 arranged along the oblique direction C are arranged obliquely toward the right front side along the oblique direction C1 as viewed in the sheet thickness direction. It can also be said that, in the present embodiment, the plurality of units 9 arranged along the oblique direction C are arranged obliquely toward the right rear side along the oblique direction C2 as viewed in the sheet thickness direction. Further, in the present embodiment, in the overhanging structure 6, the length in the cross direction X is made widest at substantially the center in the longitudinal direction Y of the inner panel 2.

As illustrated clearly in Figure 5 and Figure 6, each unit 9 has six sub-units 10 (10a to 10f). In the present embodiment, in each of the units 9, a front sub-unit 10a and a rear sub-unit 10d extend along the cross direction X, respectively. Further, in each of the units 9, the remaining four sub-units 10 extend in a direction that inclines with respect to the longitudinal direction Y in plan view. The unit 9 that has a polygonal shape is formed by the plurality of sub-units 10 in this way.

Each of the sub-units 10 (10a to 10f) has a flange 11 that is arranged adjacent to the outer panel 3, an inclined wall 12 extending from the flange 11 so as to separate from the outer panel 3, and a bottom portion 13 that is continuous with the inclined wall 12 and is separated from the flange 11.

The flange 11 is adjacent to the outer panel 3, and in the sub-unit 10, the flange 11 is a portion that is arranged closest to the outer panel 3. The flange 11 is a strip-shaped portion. In a single unit 9, the flanges 11 of the six sub-units 10a to 10f form an annular flange 15 whose outline shape is hexagonal as a whole. Note that, the annular flange 15 as a whole may form a flange having a polygonal shape other than a hexagon, may form a substantially circular flange, or may form a flange having a substantially oval shape. Further, inner ends 11a of the six flanges 11 are formed in a circular shape which is centered on the center of the annular unit 9 as a whole. Note that, the plurality of inner ends 11a as a whole may be formed in a polygonal shape or may be formed in an oval shape. Further, the plurality of inner ends 11a may be formed in an asymmetrical shape that does not have an axis of symmetry or a center of symmetry.

In the flange 11, a facing surface 11b that faces the outer panel 3 is substantially parallel to the outer panel 3. In this case, the phrase "substantially parallel" means that the undersurface 3a of the outer panel 3 and the facing surface 1 1b form an angle of zero degrees or an angle that is within a range of about several degrees in each of the cross direction X, the longitudinal direction Y, and the height direction Z. In the present embodiment, the inner end of each facing surface 11b is the inner end 11a. Further, an outer end 11c of each facing surface 1 1b is located in the vicinity of the boundary between the flange 11 and the inclined wall 12. In each flange 11, the joint 20 is arranged on the facing surface 11b. That is, the facing surface 11b is provided as a portion on which the joint 20 can be arranged. In the flange 11, on the facing surface 1 1b that faces the outer panel 3, the width to which the joint 20 can be applied is preferably 2 mm or more from the viewpoint of ensuring that a sufficient amount of the joint 20 can be provided.

In the present embodiment, in each unit 9, the flanges 11 of at least some of the sub-units 10 are adhered to the respective joints 20 at the facing surface 11b, and are adhered to the outer panel 3 through the joint 20. The inclined wall 12 extends downward from the flange 11.

The inclined wall 12 is disposed between the flange 11 and the bottom portion 13, and connects the flange 11 and the bottom portion 13. The inclined wall 12 extends from the flange 11 so as to separate from the outer panel 3. The inclined wall 12 is provided over the entire area in the longitudinal direction of the sub-unit 10 in which the relevant inclined wall 12 is provided. The inclined wall 12 is formed, for example, in a tapered shape that advances toward the central axis side (the inner end 11a side) of the unit 9 as it approaches the outer panel 3 side.

The flange 11 is continuous with the upper end of the inclined wall 12. The bottom portion 13 is continuous with the lower end of the inclined wall 12. In the unit 9, the bottom portion 13 is a portion that is farthest from the outer panel 3, and is separated from the flange 11. The bottom portion 13 is formed in a curved shape which is convex in the downward direction. The bottom portion 13 is provided over the entire area in the longitudinal direction of the sub-unit 10 in which the relevant inclined wall 12 is provided. The front end 13c of the bottom portion 13 in one unit 9 is integral with the front end 13c of the bottom portion 13 in another unit 9 that is adjacent thereto.

Next, the incomplete unit 8 that is clearly illustrated in Figure 2 and Figure 7 will be described more specifically. In the present embodiment, by having one or a plurality of sub-units 10, the incomplete unit 8 includes a portion that corresponds to one part of the unit 9. As mentioned above, the sub-unit 10 has the flange 11, the inclined wall 12, and the bottom portion 13. The facing surface 11b of the flange 11 in the incomplete unit 8 is a portion on which it is possible to arrange the joint 20.

In the present embodiment, a plurality (12) of the incomplete units 8 are provided, that is, the inner panel 2 has incomplete units 81, 82, ... 89, 810, 811, and 812. In the present embodiment, the incomplete unit 81 is arranged near the left side of the front end portion of the overhanging structure 6, and has two sub-units 10. The incomplete unit 82 is arranged near the left end of the front portion of the overhanging structure 6, and has two sub-units 10. The incomplete unit 83 is arranged to the rear of the incomplete unit 82, and has two sub-units 10. The incomplete unit 84 is arranged near the left end of the rear end portion of the overhanging structure 6, and has four sub-units 10. The incomplete unit 85 is arranged on the right side of the incomplete unit 84 at the rear end portion of the overhanging structure 6, and has three sub-units 10.

The incomplete units 86, 87, 88, 89, and 810 are formed in a symmetrical shape in the cross direction X with respect to the incomplete units 81 to 85. Thus, the incomplete units 86 to 810 have a plurality of sub-units 10.

The incomplete unit 811 is arranged at the center in the cross direction X at the front end portion of the overhanging structure 6, and has three sub-units 10. The incomplete unit 812 is arranged at the center in the cross direction X at the rear end portion of the overhanging structure 6, and has three sub-units 10.

Next, the joint 20 will be described more specifically while referring mainly to Figure 2, Figure 6, and Figure 7. The joint 20 is provided for joining the inner panel 2 and the outer panel 3. In the present embodiment, an adhesive is used as the joint 20. A mastic sealer (mastic adhesive) can be exemplified as the adhesive. A resin-based adhesive can be exemplified as the mastic sealer. In the present description, the terms "sealer" and "adhesive" are used with the same meaning. The adhesive may have a property of being cured at normal temperature (for example, 20 degrees Celsius), or may have a property of being cured by undergoing a heating process or a drying process. The adhesive that joins the inner panel 2 and the outer panel 3 is the joint 20.

The joint 20 is arranged so as to secure the joining strength between the inner panel 2 and the outer panel, the panel rigidity, and the dent resistance while achieving a reduction in the weight of the automobile hood 1. In the present embodiment, the joint 20 is provided on flanges 11 of each unit 9 and of some of the incomplete units 8 (81, 84, 85, 86, 89, 810, 811, and 812) of the inner panel 2. The incomplete units 8 and the units 9 in which the joints 20 are provided are joint-equipped units. In particular, a unit in which the joint 20 is provided on flanges 11 of the unit 9 formed in an annular shape as viewed in the sheet thickness direction of the outer panel 3 is an annular unit with joints.

Thus, in the present embodiment, the plurality of incomplete units 8 and units 9 include a plurality of j oint-equipped units.

In the present embodiment, each joint 20 is formed in a dot shape. In the present embodiment, the diameter of the joint 20 (diameter as viewed in the sheet thickness direction of the outer panel 3) is about 5 mm to 25 mm. The aspect ratio of the joint 20 (ratio of the maximum value to the minimum value of the diameter of the joint 20 as viewed in the sheet thickness direction) is for example, 1.0 to 2.0. The joint 20 contacts both of the inner panel 2 and the outer panel 3. The j oint 20 joins the facing surface 11b of the flange 11 and the undersurface 3a of the outer panel 3. By the flange 11 which is a part of the inner panel 2 which projects to the outer panel 3 side being joined to the outer panel 3 through the joint 20 in this way, the inner panel 2 can increase the panel rigidity and the dent resistance of the outer panel 3.

According to the present embodiment, a predetermined first form is provided. The term "first form" refers to a form in which the joints 20 are arranged in an arrangement including a predetermined pattern P1 in some of the joint-equipped units (in the present embodiment, the units 9 and the incomplete units 84 and 89), and in the remaining joint-equipped units (in the present embodiment, the incomplete units 81, 85, 86, 810, 811, and 812) the joints 20 are arranged in an arrangement that includes a part of the aforementioned predetermined pattern P1.

In the present embodiment, the predetermined pattern P1 is a dot pattern with three dots. The pattern P1 is a triangular pattern as viewed in the sheet thickness direction of the outer panel 3, and is a pattern that is not one straight line. Although the pattern P1 in the present embodiment is a pattern that is an equilateral triangle, the pattern P1 may be an isosceles triangle pattern, or may be a triangular pattern in which the lengths of the three sides are different from each other. A dot-shaped joint 20 is arranged at each vertex of the pattern P1.

The predetermined pattern P1 is set to the same size in each of a plurality of joint-equipped units. In other words, the pattern P1 is set to the same size in each of the joint-equipped units in which the joints 20 are arranged in the pattern P1. In addition, in the present embodiment, the pattern P1 is set so as to have the same orientation as viewed in the sheet thickness direction in each of the joint-equipped units in which the joints 20 are arranged in the pattern P1. In the present embodiment, as viewed in the sheet thickness direction, in the pattern P1, one joint 20 is arranged at the front side in the longitudinal direction Y, another joint 20 is arranged at a position which is on the right rear side of the aforementioned one joint 20, and another joint 20 is arranged at a position which is on the left rear side of the aforementioned one joint 20. As viewed in the sheet thickness direction, the relative positions of (relative distances between) the three joints 20 in one pattern P1 are common to the plurality of patterns P1.

With regard to the joints 20 in one pattern P1, the distance between the two joints 20 which are farthest from each other is preferably 200 mm or less from the viewpoint of sufficiently securing the panel rigidity and the dent resistance of the outer panel 3, and more preferably is 150 mm or less, and further preferably is 110 mm or less.

In the present embodiment, the joints 20 are arranged in an arrangement including one pattern P1 in one unit 9. By this means, a plurality of dot-shaped joints 20 are arranged in one unit 9. In the present embodiment, the joints 20 are arranged in the pattern P1 in all of the units 9. By this means, in the present embodiment, 15 or more of the patterns P1 are provided. In addition, in the present embodiment, the orientations of the respective patterns P1 in the respective units 9 are aligned with each other, one vertex of the triangular shape is arranged near the vehicle front side, and two vertices of the triangular shape are arranged near the vehicle rear side. Note that, the orientation of the pattern P1 may be different among the plurality of units 9. Further, a unit 9 in which the joint 20 is not provided may exist.

In the present embodiment, from the viewpoint of sufficiently securing the panel rigidity and the dent resistance of the outer panel 3, it is preferable that a distance L1 between the centers (central axes S1 and S1) as viewed in the sheet thickness direction of two units 9 and 9 which are adjacent to each other is 200 mm or less.

Further, in the present embodiment, in some incomplete units 8 (84 and 89), the joints 20 are arranged in the pattern P1. Although in the present embodiment the orientation of the pattern P1 in each of the incomplete units 84 and 89 is aligned with the orientation of the pattern P1 in the respective units 9, the orientation may be different from the orientation in the units 9. Further, in some incomplete units 8 (81, 85, 86, 810, 811, and 812), the joints 20 are arranged in an arrangement including a part of the pattern P1 (arrangement of a partial pattern P2), and in the present embodiment the joints 20 are arranged in an arrangement that is only a part of the pattern P1. The part of the pattern P1 (partial pattern P2) in the incomplete units 81, 86, and 811 which are on the vehicle front side is a pattern in which two vertices of the triangular pattern are connected. On the other hand, the part of the pattern P1 (partial pattern P2) in the incomplete units 85, 810, and 812 which are on the vehicle rear side is a pattern in which one vertex of the triangular pattern is extracted. Although in the present embodiment the orientation of the partial pattern P2 is aligned with the orientation of the pattern P1, the orientation of the partial pattern P2 may be different from the orientation of the pattern P1.

In the present embodiment, the patterns P1 and the partial patterns P2 whose positions in the cross direction X are aligned are arranged at a constant pitch in the cross direction X (rectilinear direction), and furthermore, the patterns P1 and the partial patterns P2 whose positions in the longitudinal direction Y are aligned are arranged at a constant pitch in the longitudinal direction Y (rectilinear direction). Further, in the present embodiment, the patterns P1 and the partial patterns P2 are arranged at a constant pitch along each oblique direction C (C1 and C2; rectilinear direction) as a third direction. In the present embodiment, the patterns P1 and the partial patterns P2 arranged along the oblique direction C are arranged obliquely in the direction toward the right front side along the oblique direction C1 as viewed in the sheet thickness direction. Further, in the present embodiment, the patterns P1 and the partial patterns P2 arranged along the oblique direction C are arranged obliquely in the direction toward the right rear side along the oblique direction C2 as viewed in the sheet thickness direction.

According to the above configuration, the distance L1 between the centers (central axes S1 and S1) of two annular units with joints which are adjacent to each other is 200 mm or less. By this means, the panel rigidity and the dent resistance of the outer panel 3 can be sufficiently secured. Further, as viewed in the sheet thickness direction of the outer panel 3, the joints 20 are arranged in a well-balanced manner in the automobile hood 1. In this respect also, the panel rigidity and the dent resistance of the outer panel 3 can be sufficiently secured.

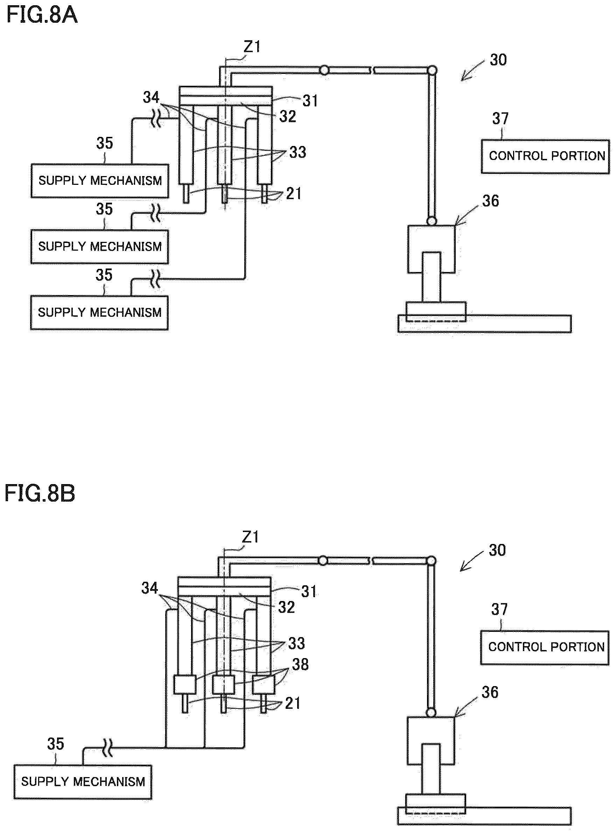

The foregoing is a description of the schematic configuration of the automobile hood 1. Next, an applicator 30 for applying an adhesive 21 to serve as the joint 20 will be described. Figure 8A is a schematic diagram of one example of the applicator 30. Referring to Figure 8A, the applicator 30 is an apparatus that discharges the adhesive 21 (sealer) that serves as the joint 20.

The applicator 30 has a head 31 including a plurality of nozzles 33, a plurality of supply mechanisms 35 for supplying the adhesive 21 to each of the plurality of nozzles 33, a position changing mechanism 36 for changing the position of the head 31 with respect to the inner panel 2 or the outer panel 3 as an application target, and a control portion 37.

The head 31 has a base 32, and the plurality of nozzles 33 that are supported by the base 32 and which change position integrally with the base 32. In the present embodiment, the arrangement of the nozzles 33 is the same as the arrangement of the joints 20 in the pattern P1. That is, in the present embodiment, the nozzles 33 are arranged at the respective vertices of a triangular shape. In the present embodiment, the relative positions of the plurality of (three) nozzles 33 are fixed. By the adhesive 21 being discharged simultaneously from all the nozzles 33, the adhesive 21 can be discharged so as to be in the arrangement of the pattern P1. The applicator 30 is also capable of discharging the adhesive 21 from one or two of the nozzles 33. By this means, the adhesive 21 can be discharged so as to be in the arrangement of the partial pattern P2.

Each nozzle 33 is connected to the corresponding supply mechanism 35 through, for example, a flexible tube 34. One supply mechanism 35 is provided for each nozzle 33. Each supply mechanism 35 is a mechanism for supplying the adhesive 21 to the corresponding nozzle 33, and includes a pump or the like for supplying the adhesive 21 from a tank, which is not illustrated in the drawing, to the nozzle 33. Each supply mechanism 35 is configured to supply the adhesive 21 independently of the other supply mechanisms 35.

The position changing mechanism 36 is formed using, for example, a robot arm, a linear actuator, or the like, and is configured to be capable of moving the head 31 with respect to the application target in at least two axial directions that are perpendicular to each other. Preferably the position changing mechanism 36 is configured to be capable of rotating the head 31 around an axis parallel to the central axis of each nozzle 33. Note that, it is further preferable that the position changing mechanism 36 is configured to be capable of moving the head 31 and the application target relative to each other in the directions of X1, Y1, and Z1 axes that are perpendicular to each other, and configured to be capable of moving the head 31 and the application target relative to each other about the X1, Y1, and Z1 axes. In particular, it is preferable that the position changing mechanism 36 is rotatable around the Z1 axis that is an axis which is parallel to the central axis of each nozzle 33.

The control portion 37 is formed, for example, using a computer including a CPU (Central Processing Unit), a ROM (Read Only Memory) and a RAM (Random Access Memory), an FPGA (Field Programmable Gate Array), or a PLC (Programmable Logic Controller) or the like. The control portion 37 controls discharge of the adhesive 21 from each nozzle 33 by controlling each supply mechanism 35 and the position changing mechanism 36. The control portion 37 controls the switching on and off of operation of the respective supply mechanisms 35 in an individual manner. By this means, the plurality of nozzles 33 are configured to be individually switchable between an on state in which the nozzle 33 supplies the adhesive 21 and an off state in which the nozzle 33 does not supply the adhesive 21. The control portion 37 controls the supply mechanisms 35 and the position changing mechanism 36 according to a program stored in a storage portion or the like of the control portion 37.

Note that, in the example of the applicator 30 described above, the supply mechanism 35 is provided for each of the plurality of nozzles 33 to thereby make it possible for the supply of the adhesive 21 from the respective nozzles 33 to be switched on and off. However, it is not necessary to adopt this configuration. As illustrated in Figure 8B that illustrates another example of the applicator 30, a single supply mechanism 35 and the plurality of nozzles 33 may be connected through the tubes 34. In this case, the adhesive 21 from the supply mechanism 35 is supplied to the respective nozzles 33 through the tubes 34. A shutter 38 is provided in each nozzle 33. The shutter 38, for example, includes an electromagnetic valve or the like, and performs operations that open and close the corresponding nozzle 33. The opening and closing operations of each shutter 38 are individually controlled by the control portion 37. When the shutter 38 is open, the adhesive 21 is discharged from the corresponding nozzle 33, and when the shutter 38 is closed, the adhesive 21 is not discharged from the corresponding nozzle 33. According to the above configuration, the plurality of nozzles 33 are configured to be individually capable of switching the supply of the adhesive 21 on and off.

Note that, although in the present embodiment a configuration in which the nozzles 33 change position is described, a different configuration may be adopted. A configuration may be adopted in which the positions of the nozzles 33 are fixed and the position of the application target is changed with respect to the nozzles 33, or a configuration may be adopted in which it is possible to change the positions of both the nozzles 33 and the application target.

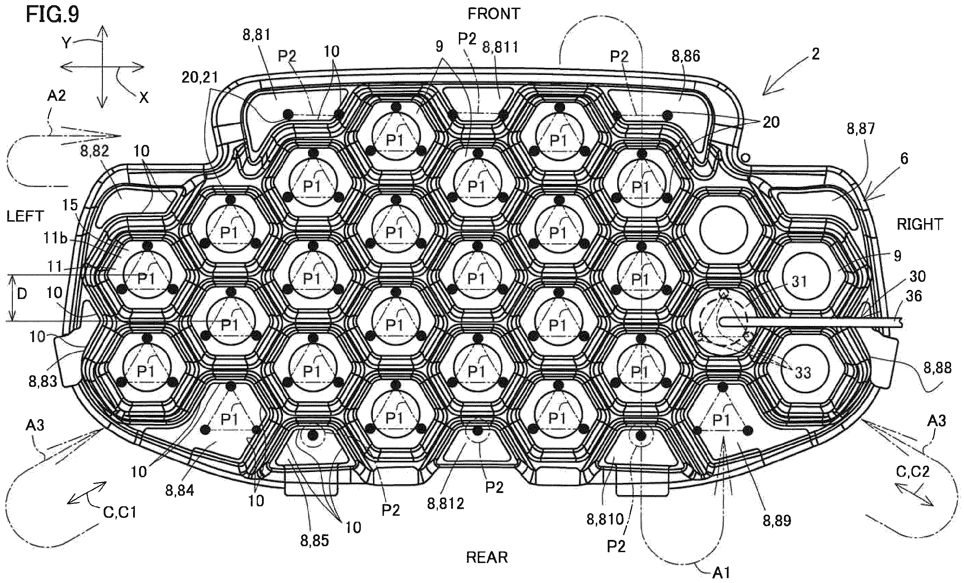

Next, the main points of an example of a method for producing the automobile hood 1 will be described. Figure 9 is a schematic plan view for describing the manner in which the applicator 30 applies the adhesive 21. Referring to Figure 8A and Figure 9, in an application process for applying the joints 20, first, the inner panel 2 or the outer panel 3 as an application target is placed on an unshown workbench. In the present embodiment, a state in which the inner panel 2 as the application target is placed on a workbench is illustrated. Next, upon the control portion 37 reading and executing the aforementioned program, an operation for applying the adhesive 21 that will serve as the joints 20 is performed.

In the operation for applying the adhesive 21, the adhesive 21 is applied to the application target (in the present embodiment, the inner panel 2) using the applicator 30 including the plurality of nozzles 33 that are arranged in the predetermined pattern P1. The applicator 30 moves each nozzle 33 of the head 31 in the cross direction X, the longitudinal direction Y, and the height direction Z with respect to the inner panel 2 by operation of the position changing mechanism 36. By this means, the positions of the respective nozzles 33 are changed to places where the joints 20 are to be set on the inner panel 2. Each nozzle 33 is configured to supply (apply) the adhesive 21 to each unit 9 and corresponding incomplete units 8 (a plurality of places) by, for example, moving in the cross direction X while reciprocating in the longitudinal direction Y with respect to the overhanging structure 6 of the inner panel 2 as indicated by an arrow A1.

Note that, the meaning of the phrase "applies the adhesive 21 while moving the nozzles 33" includes an operation in which, during an operation for applying the adhesive using the nozzles 33, movement of the nozzles 33 as viewed in the sheet thickness direction is temporarily stopped and the adhesive 21 is applied. In the present embodiment, each nozzle 33 applies the adhesive 21 at a corresponding place on the overhanging structure 6 while moving in the longitudinal direction Y as a rectilinear direction. After applying the adhesive 21 to one row of the units 9 and the incomplete units 8 (joint-equipped units) which are arranged in an aligned relationship in the longitudinal direction Y, each nozzle 33 moves in the cross direction X by an amount corresponding to the arrangement pitch between two of units 9 and 9 that are adjacent in the cross direction X. Thereafter, each nozzle 33 again applies the adhesive 21 at a corresponding place on the overhanging structure 6 while moving in the longitudinal direction Y as a rectilinear direction.

When applying the adhesive 21 to the flanges 11 of the units 9 and when applying the adhesive 21 to the flanges 11 of the incomplete units 84 and 89, the applicator 30 supplies the adhesive 21 from all of the nozzles 33 simultaneously to thereby apply the adhesive 21 that serves as the joints 20 in the predetermined pattern P1 to the inner panel 2.

Further, when applying the adhesive 21 to the incomplete units 81, 85, 86, 810, 811, and 812, the applicator 30 supplies the adhesive 21 from some of the nozzles 33 to thereby apply the adhesive 21 that serves as the joints 20 in one part (the partial pattern P2) of the predetermined pattern P1 to the inner panel 2. More specifically, when applying the adhesive 21 to the incomplete units 81, 86, and 811, the applicator 30 supplies the adhesive 21 from two nozzles 33, and when applying the adhesive 21 to the incomplete units 85, 810, and 812, the applicator 30 supplies the adhesive 21 from one nozzle 33.

After the adhesive 21 is applied to the inner panel 2 with the above configuration, the inner panel 2 and the outer panel 3 are fitted together using a robot arm (not illustrated) or the like. By this means, some of the adhesive 21 contacts both the inner panel 2 and the outer panel 3 to form the joints 20, and the joints 20 join these panels 2 and 3 together. Thereafter, for example, the outer circumferential edge part of the outer panel 3 is subjected to hemming, and thereafter a bake-hardening process or the like is performed to complete the automobile hood 1.

Note that, although in the present embodiment the application target of the adhesive 21 that will serve as the joint 20 is the inner panel 2, the application target may be the outer panel 3, and the applicator 30 may apply the adhesive 21 by performing a similar operation as the above-described operation with respect to the outer panel 3. Further, the applicator 30 may perform application of the adhesive 21 by applying one part of the adhesive 21 to the inner panel 2 and applying the remaining part of the adhesive 21 to the outer panel 3.

As described above, according to the present embodiment, in the first form, the joints 20 can be formed in an arrangement that includes the single pattern P1 in some of the joint-equipped units (the incomplete units 84 and 89, and each unit 9), and in the remaining part of the joint-equipped units (the incomplete units 81, 85, 86, 810, 811 and 812) the joints 20 can be formed in an arrangement that includes the partial pattern P2 that is one part of the pattern P1. By this means, in the present embodiment, for example, the sealer applicator 30 that includes the plurality of nozzles 33 arranged in the predetermined pattern P1 can apply the adhesive 21 that will serve as the joints 20 so as to be arranged in the aforementioned shape of the pattern P1 or shape of the partial pattern P2. Hence, the operation for applying the adhesive 21 for joining the outer panel 3 and the inner panel 2 can be completed more quickly using the fixed patterns, and the productivity with respect to the automobile hood 1 can be increased.

Further, according to the present embodiment, the plurality of units 9 include a plurality of units 9 which include the flanges 11 that have substantially the same shape as each other. By this means, the panel rigidity and the dent resistance can be made more uniform in each part of the outer panel 3.

Further, according to the present embodiment, the pattern P1 is set to the same size in each of a plurality of the joint-equipped units. According to this configuration, it is not necessary to change the relative positions of the nozzles 33 when applying the adhesive 21 from the nozzles 33. Hence, the operation for applying the adhesive 21 for joining the outer panel 3 and the inner panel 2 can be completed more quickly using the fixed patterns, and the productivity with respect to the automobile hood 1 can be increased.

Further, according to the present embodiment, the patterns P1 and the partial patterns P2 are arranged in an aligned relationship in the longitudinal direction Y. According to this configuration, it is possible to more quickly perform the operations for moving the nozzles 33 when applying the adhesive 21 in the pattern P1 and the partial pattern P2 by moving the nozzles 33 in the longitudinal direction Y, and the productivity with respect to the automobile hood 1 can be increased.

Further, according to the present embodiment, the predetermined pattern P1 is a dotted pattern having three or more dots. According to this configuration, sufficient panel rigidity and dent resistance can be secured in a single unit 9.

Further, according to the present embodiment, the predetermined pattern P1 is provided at 15 or more places in one automobile hood 1. According to this configuration, the joints 20 can be distributed over a wider range in the outer panel 3. By this means, sufficient panel rigidity and dent resistance can be secured over the whole of the automobile hood 1.

Further, according to the present embodiment, when applying the adhesive 21 that will serve as the joints 20 to the inner panel 2 as the application target, the adhesive 21 is applied in the predetermined pattern P1 to the inner panel 2 by supplying the adhesive 21 from all of the nozzles 33 simultaneously, and the adhesive 21 is applied in a pattern that is one part (the partial pattern P2) of the predetermined pattern P1 to the inner panel 2 by supplying the adhesive 21 from some of the nozzles 33. According to this configuration, the adhesive 21 can be applied in an arrangement that includes the single pattern P1 in some of the j oint-equipped units (the incomplete units 84 and 89, and each unit 9), and in the remaining part of the joint-equipped units (the incomplete units 81, 85, 86, 810, 811 and 812) the adhesive 21 can be applied in an arrangement that includes one part of the pattern P1. Thus, by using the single applicator 30 having the plurality of nozzles 33, an operation for applying the adhesive 21 for joining the outer panel 3 and the inner panel 2 can be completed more quickly using the fixed patterns, and the productivity with respect to the automobile hood 1 can be increased.

Furthermore, according to the present embodiment, the adhesive 21 is applied to a plurality of places on the inner panel 2 while causing the plurality of nozzles 33 to reciprocate with respect to the inner panel 2. Thus, an operation for forming the joints 20 can be performed quickly by applying the adhesive 21 while the plurality of nozzles 33 perform reciprocating motion.

By means of the configuration and actions of the present embodiment described above, a decrease in the panel rigidity and the dent resistance can be suppressed even when the outer panel 3 is made with a thin wall (for example, a sheet thickness of 0.4 to 0.6 mm in the case of a steel sheet, and a sheet thickness of 0.60 to 0.75 mm in the case of an aluminum sheet) to reduce the weight of the automobile body. In addition, particularly in a case where an interval between the joints 20 and the outer panel 3 or the inner panel 2 is made small and the number of the joints 20 is increased in order to increase the panel rigidity, it is possible to reduce an increase in the time required to make the joints 20.

An embodiment of the present invention was described above. However, the present invention is not limited to the above embodiment. In the present invention, various changes are possible within the scope of the accompanying claims. Note that, hereunder, configurations that are different from the above embodiment are mainly described, and like components are denoted by the like reference symbols as in the above embodiment and a detailed description thereof is omitted. More specifically, components that are the like components which have been described once may be denoted by the like reference numerals, and a detailed description of those components may be omitted.

In the embodiment described above, a form in which the adhesive 21 is applied by the nozzles 33 that traverse the inner panel 2 by moving in the longitudinal direction Y as a rectilinear direction as viewed in the sheet thickness direction was described as an example. However, a different form may be adopted. For example, as illustrated by an arrow A2 in Figure 9, the adhesive 21 may be supplied (applied) to each unit 9 and the corresponding incomplete units 8 (a plurality of places) by each nozzle 33 moving in the longitudinal direction Y while reciprocating in the cross direction X with respect to the overhanging structure 6 of the inner panel 2. In this case, each nozzle 33 applies the adhesive 21 to a corresponding place on the overhanging structure 6 while moving in the cross direction X as a rectilinear direction. Further, after applying the adhesive 21 to one row of the units 9 and incomplete units 8 (joint-equipped units) which are arranged in an aligned relationship in the cross direction X and whose positions are aligned in the longitudinal direction Y, each nozzle 33 moves in the longitudinal direction Y by an amount corresponding to an arrangement pitch D between two of the units 9 and 9 that are adjacent in the longitudinal direction Y (diagonally forward direction). Thereafter, each nozzle 33 again applies the adhesive 21 at a corresponding place on the overhanging structure 6 while moving in the cross direction X as a rectilinear direction.

Further, for example, as illustrated by an arrow A3 in Figure 9, the adhesive 21 may be supplied (applied) to each unit 9 and the corresponding incomplete units 8 (a plurality of places) by each nozzle 33 moving in either one of the oblique directions C1 and C2 while reciprocating in the other of the oblique directions C1 and C2 with respect to the overhanging structure 6 of the inner panel 2. In this case, each nozzle 33 applies the adhesive 21 to a corresponding place on the overhanging structure 6 while moving in either one of the oblique directions C1 and C2 as a rectilinear direction. Further, after applying the adhesive 21 to one row of the units 9 and incomplete units 8 (joint-equipped units) which are arranged in an aligned relationship in either one of the oblique directions C1 and C2, each nozzle 33 moves in the other of the oblique directions C1 and C2 by an amount corresponding to an arrangement pitch between two of the units 9 and 9 that are adjacent in the other of the oblique directions C1 and C2. Thereafter, each nozzle 33 again applies the adhesive 21 at a corresponding place on the overhanging structure 6 while moving in either one of the oblique directions C1 and C2.

### <First Modification of First Embodiment>

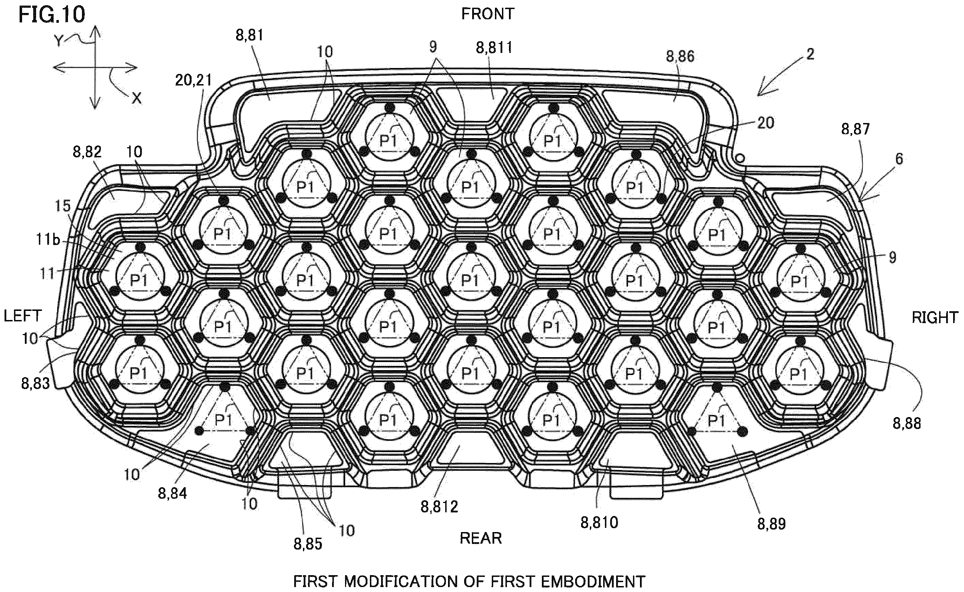

In the embodiment described above, a form in which the joints 20 are formed in the partial pattern P2 in addition to the pattern P1 was described as an example. However, a different form may be adopted. For example, as illustrated in Figure 10 that is a diagram for describing a first modification of the first embodiment, an arrangement in the partial pattern P2 need not be provided. In this modification, a predetermined second form is provided. The term "second form" refers to a form in which, in each of the j oint-equipped units (all of the units 9 and the incomplete units 84 and 89), a plurality of the joints 20 are arranged in an arrangement including the predetermined pattern P1. In the present modification, three of the joints 20 are disposed in all of the j oint-equipped units. A process for realizing the arrangement of the joints 20 illustrated in this modification corresponds to a process in which the process for applying the joints 20 in the partial pattern P2 is omitted in the first embodiment.

As described above, according to the present modification, in the second form the joints 20 can be formed in an arrangement including the single pattern P1 in each of the j oint-equipped units (the units 9, and the incomplete units 84 and 89). By this means, in the present modification, the sealer applicator 30 that includes the plurality of nozzles 33 arranged in the predetermined pattern P1 can apply the adhesive 21 that will serve as the joints 20 so as to be arranged in the shape of the pattern P1. Hence, the operation for forming the joints 20 for joining the outer panel 3 and the inner panel 2 can be completed more quickly using the fixed pattern, and the productivity with respect to the automobile hood 1 can be increased.

### <Second Modification of First Embodiment>

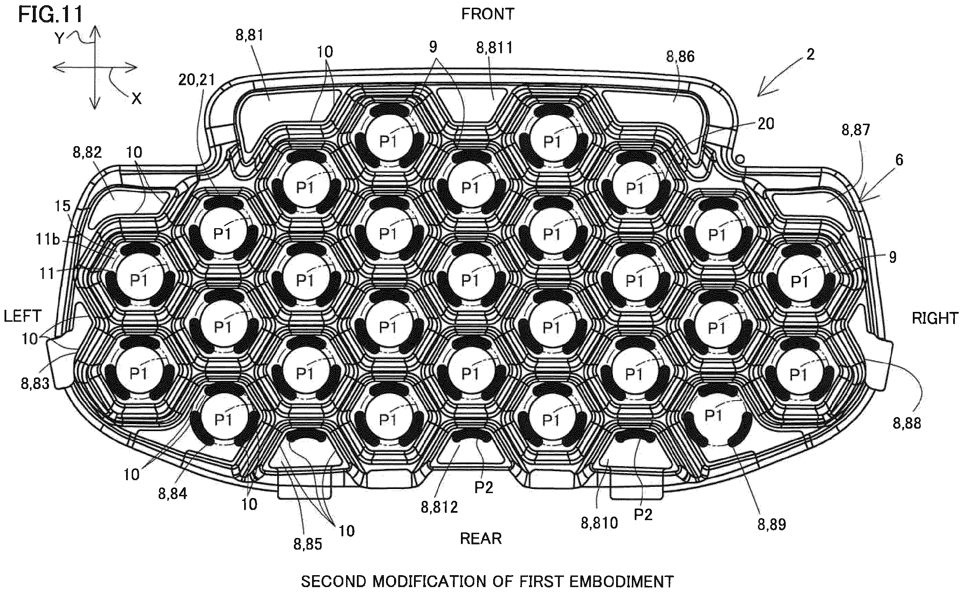

In the embodiment and modification described above, forms in which the arrangement pattern P1 of the respective joints 20 is a dotted pattern were described as examples. However, a different form may be adopted. For example, as illustrated in Figure 11 that is a diagram for describing a second modification of the first embodiment, an arrangement pattern of the respective joints 20 may be a linear pattern P1 having three or more lines.

In the modification illustrated in Figure 11, the respective joints 20 are arranged on a virtual circle with a predetermined interval therebetween, and are formed in an arc shape. When realizing the arrangement of the joints 20 illustrated in this modification, in addition to causing the nozzles 33 and the application target (the inner panel 2) to move relative to each other in the same manner as the manner described in the first embodiment, when discharging the adhesive 21 that will serve as the joints 20 onto the j oint-equipped unit (unit 9) simultaneously from the three nozzles 33, the three nozzles 33 are rotated about the Z1 axis with respect to the application target (the inner panel 2). By this means, the adhesive 21 is discharged from the nozzles 33 in a manner so that the adhesive 21 describes an arc. Note that, each of the adhesives 21 may be formed in a linear shape, or may be formed in another shape such as a waveform shape. According to this configuration, the joint 20 can be formed over a wider area.

### <Third Modification of First Embodiment>

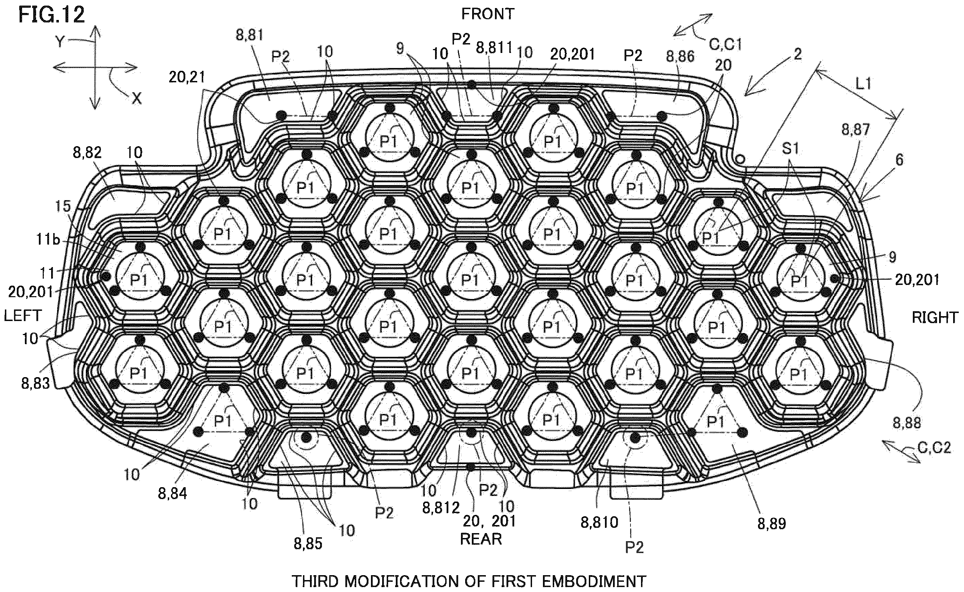

In the embodiment and modifications described above, forms in which all of the joints 20 belong to the pattern P1 or the partial pattern P2 were described as examples. However, a different form may be adopted. In a modification illustrated in Figure 12, a joint 20 which does not belong to either of the pattern P1 and the partial pattern P2 may be provided. In the modification illustrated in Figure 12, in addition to the arrangement of the joints 20 illustrated in the first embodiment, for example, four joints 20 (201) are added. Specifically, as a joint-equipped unit, an additional-joint-equipped unit is provided which, in addition to having the joints 20 in the pattern P1 or the partial pattern P2, also has a joint 20 (201) which is arranged at a place that deviates from the layout of the joints 20 in the pattern P1.

In this modification, for example, in each of the units 9 and 9 that are the outermost units 9 in the cross direction X, the joint 201 is provided in addition to the joints 20 in the pattern P1. Further, in this modification, in the incomplete units 811 and 812 which are located at positions which are at the center in the cross direction X and are at the front end and rear end, respectively, the joint 201 is provided in addition to the joints 20 of the partial pattern P2. Each of these joints 201 is formed by applying the adhesive 21 at a place that deviates from the layout of the adhesive 21 in the pattern P1 or the partial pattern P2 in a process that is prior to or a process that is after the aforementioned application process in which the joints 20 in the pattern P1 or the partial pattern P2 are applied using the plurality of nozzles 33.

According to this modification, by additionally providing the joints 201 in addition to the joints 20, it is possible to further increase the balance of the joining strength between the inner panel 2 and the outer panel 3. As a result, the panel rigidity and the dent resistance of the outer panel 3 can be further increased.

Furthermore, according to this modification, by the simple and brief process of additionally applying a small number of the joints 201 (the adhesive 21) which is performed before or after the process of applying the adhesive 21 that will serve as the joints 20 in the pattern P1 and the partial pattern P2, the panel rigidity and the dent resistance of the outer panel 3 can be further increased.

### <Second Embodiment>

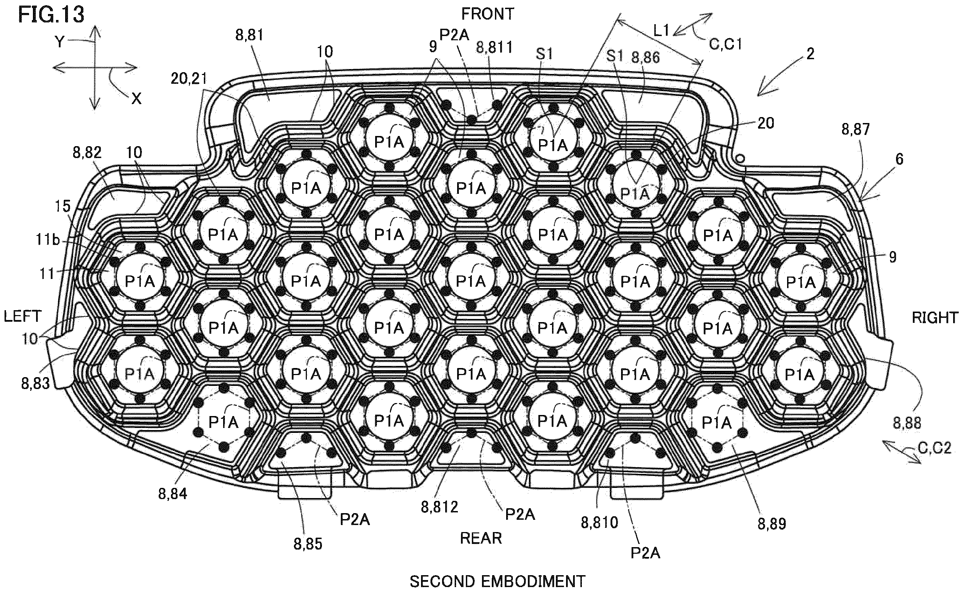

Figure 13 is a view for describing an arrangement of the joints 20 pertaining to a second embodiment. The inner panel 2 and the outer panel 3 of the second embodiment are the same as in the first embodiment. On the other hand, in the second embodiment, the joint 20 is provided on the flanges 11 of each unit 9 and some of the incomplete units 8 (84, 85, 89, 810, 811, and 812) of the inner panel 2. The incomplete units 8 and the units 9 in which the joint 20 is provided are joint-equipped units. Thus, in the present embodiment, the plurality of incomplete units 8 and units 9 include a plurality of the j oint-equipped units.

In the second embodiment, similarly to the first embodiment, the panel rigidity and the dent resistance of the outer panel 3 can be increased by the flanges 11 which are parts of the inner panel 2 which project to the outer panel 3 side being joined to the outer panel 3 through the joints 20.

In the second embodiment, a first form is provided. The term "first form" refers to a form in which the joints 20 are arranged in an arrangement including a predetermined pattern P1A in some of the joint-equipped units (in the second embodiment, the units 9 and the incomplete units 84 and 89), and in the remaining joint-equipped units (in the present embodiment, the incomplete units 85, 810, 811, and 812) the joints 20 are arranged in an arrangement (a partial pattern P2A) including a part of the predetermined pattern P1A.

In the second embodiment, the predetermined pattern P1A is a dot pattern with six dots. The pattern P1A is a hexagonal pattern as viewed in the sheet thickness direction of the outer panel 3, and is a pattern that is not one straight line.

The predetermined pattern P1A is set to the same size in each of a plurality of joint-equipped units. In other words, the pattern P1A is set to the same size in each of the joint-equipped units in which the joints 20 are arranged in the pattern P1A. In addition, in the present embodiment, the pattern P1A is set so as to have the same orientation as viewed in the sheet thickness direction in each of the joint-equipped units in which the joints 20 are arranged in the pattern P1A. In the present embodiment, as viewed in the sheet thickness direction, in the pattern P1A, at each of the three places in the cross direction X, two joints 20 are arranged so as to be aligned in a straight line in the longitudinal direction Y. As viewed in the sheet thickness direction, the relative positions of (relative distances between) the six joints 20 in one pattern P1A are common to the plurality of patterns P1A.

Although the pattern P1A of the second embodiment is a pattern that is a regular hexagon, the pattern P1A may be a hexagonal pattern in which the length of at least one side is different from the lengths of the other sides. A dot-shaped joint 20 is arranged at each vertex of the pattern P1A. In the second embodiment, the hexagonal vertices of the unit 9 and the vertices of the hexagonal pattern P1A need not be aligned, or may be aligned. With regard to the joints 20 in one pattern P1A, the distance between the two joints 20 which are farthest from each other is preferably 200 mm or less from the viewpoint of sufficiently securing the panel rigidity and the dent resistance of the outer panel 3, and more preferably is 150 mm or less, and further preferably is 110 mm or less.

In the second embodiment, the joints 20 are arranged in an arrangement that includes one pattern P1A in one unit 9. By this means, a plurality of dot-shaped joints 20 are arranged in one unit 9. In the present embodiment, the joints 20 are arranged in the pattern P1A in all of the units 9. By this means, in the second embodiment, 15 or more of the patterns P1A are provided. In addition, in the second embodiment, the orientations of the patterns P1A in the respective units 9 are aligned with each other. Note that, the orientation of the pattern P1A may differ among the plurality of units 9. Further, a unit 9 in which the joint 20 is not provided may exist.

Further, as mentioned above, in the second embodiment, in some of the incomplete units, namely, the incomplete units 84 and 89, the joints 20 are disposed in the pattern P1A. Although in the second embodiment the orientation of the pattern P1A in each of the incomplete units 84 and 89 is aligned with the orientation of the pattern P1A in the units 9A, the orientation may be different therefrom. Further, in some of the incomplete units, namely, the incomplete units 85, 810, 811, and 812, the joints 20 are arranged in an arrangement including a part of the pattern P1A (arrangement in a partial pattern P2A), and in the present embodiment the joints 20 are arranged in an arrangement that is only a part of the pattern P1A. The part of the pattern P1A in the incomplete units 85, 810, 811, and 812 is a pattern which, among the hexagonal pattern, connects three vertices that are continuous in the circumferential direction of the hexagon, and this pattern is the partial pattern P2A.

In the second embodiment, the patterns P1A and the partial patterns P2A whose positions in the cross direction X are aligned are arranged at a constant pitch in the cross direction X (rectilinear direction), and furthermore, the patterns P1A and the partial patterns P2A whose positions in the longitudinal direction Y are aligned are arranged at a constant pitch in the longitudinal direction Y (rectilinear direction). Further, in the present embodiment, the patterns P1A and the partial patterns P2A are arranged at a constant pitch along each oblique direction C (C1 and C2; rectilinear direction) as a third direction. In the present embodiment, the patterns P1A and the partial patterns P2A arranged along the oblique direction C are arranged obliquely in the direction toward the right front side along the oblique direction C1 as viewed in the sheet thickness direction. Further, in the present embodiment, the patterns P1A and the partial patterns P2A are arranged obliquely in the direction toward the right rear side along the oblique direction C2 as viewed in the sheet thickness direction.

The foregoing is a description of the arrangement of the joints 20 in the second embodiment. The applicator 30 for applying the adhesive 21 that will serve as the joints 20 of the second embodiment is the same as the applicator 30 described in the first embodiment. That is, the joints 20 arranged in an arrangement that includes the pattern P1A and in an arrangement that includes the partial pattern P2A can be realized by using the applicator 30 having the three nozzles 33 arranged at the three vertices of a triangular shape.

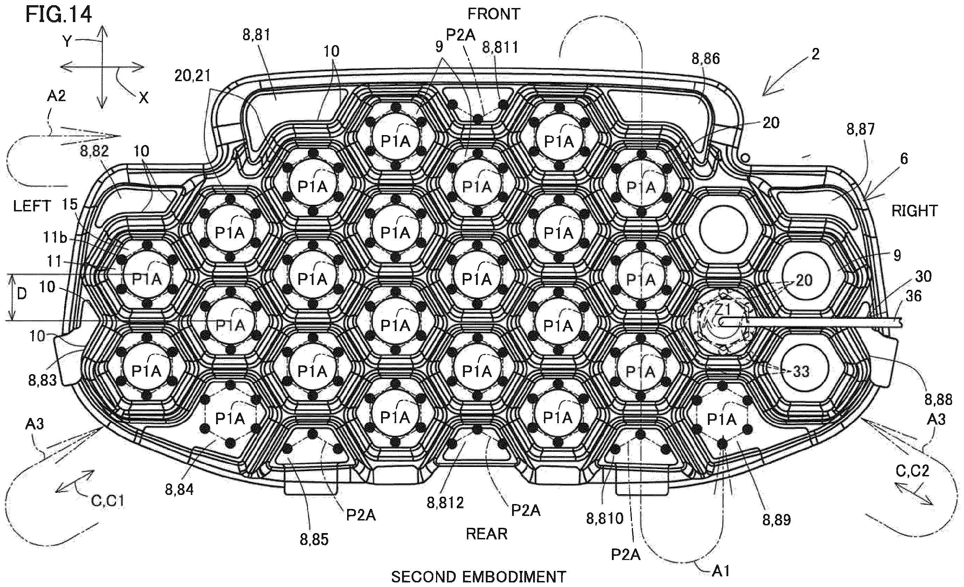

Figure 14 is a schematic plan view for describing the manner in which the applicator 30 applies the adhesive 21 in the second embodiment. Referring to Figure 14, in an application process for applying the adhesive 21 that will serve as the joints 20 in the second embodiment, first, the inner panel 2 or the outer panel 3 as the application target is placed on an unshown workbench. In the second embodiment, a state in which the inner panel 2 as the application target is placed on a workbench is illustrated. Next, upon the control portion 37 reading and executing the aforementioned program, an operation for applying the adhesive 21 is performed.

In the operation for applying the adhesive 21, the adhesive 21 is applied to the application target (in the second embodiment, the inner panel 2) using the applicator 30 including the plurality of nozzles 33 which are arranged in an arrangement that includes a part of the predetermined pattern P1A, that is, using the applicator 30 including the plurality of nozzles 33 arranged in an arrangement that includes the partial pattern P2A. In the second embodiment, the applicator 30 moves each nozzle 33 of the head 31 in the cross direction X, the longitudinal direction Y, and the height direction Z with respect to the inner panel 2 by operation of the position changing mechanism 36. By this means, the positions of the respective nozzles 33 are changed to places where the joints 20 are to be set on the inner panel 2. Each nozzle 33 is configured to supply the adhesive 21 to each unit 9 and corresponding incomplete units 8 by, for example, moving in the cross direction X while reciprocating in the longitudinal direction Y with respect to the overhanging structure 6 of the inner panel 2 as indicated by an arrow A1.

When applying the adhesive 21 to the flanges 11 of the units 9 and when applying the adhesive 21 to the flanges 11 of the incomplete units 84 and 89, the applicator 30 supplies the adhesive 21 from all of the nozzles 33 simultaneously to thereby apply the adhesive 21 in a pattern that is one part of the pattern P1A onto the inner panel 2. Next, the head 31 rotates 180° about the Z1 axis to thereby change the orientation of the three nozzles 33. The adhesive 21 is then applied in a pattern that is the remaining part of the pattern P1A to the inner panel 2 by supplying the adhesive 21 simultaneously from all of the nozzles 33. Thus, by the adhesive 21 being disposed in two patterns (patterns corresponding to two of the patterns P1 of the first embodiment) whose orientations differ from each other by 180°, the adhesive 21 that serves as the joints 20 arranged in the pattern P1A is provided.

Further, when applying the adhesive 21 to the incomplete unit 85, 810, 811, and 812, after the applicator 30 supplies the adhesive 21 from one of the nozzles 33, the applicator 30 moves the nozzles 33 slightly in the longitudinal direction Y and then supplies the adhesive 21 from the remaining two nozzles 33 to thereby apply the adhesive 21 to the inner panel 2 in a pattern that is one part (the partial pattern P2A) of the predetermined pattern P1A.

After the adhesive 21 is applied to the inner panel 2 by the configuration described above, the inner panel 2 and the outer panel 3 are fitted together using a robot arm (not illustrated) or the like. By this means, some of the adhesive 21 contacts both the inner panel 2 and the outer panel 3 to form the joints 20, and the joints 20 join together these panels 2 and 3. Thereafter, for example, the outer circumferential edge part of the outer panel 3 is subjected to hemming or the like to complete assembly of the automobile hood 1.

In the second embodiment, similar advantageous effects as the advantageous effects of the first embodiment are obtained. That is, in the first form in the second embodiment, the joints 20 can be formed in an arrangement that includes the single pattern P1A in some of the j oint-equipped units (the incomplete units 84 and 89, and each unit 9), and in the remaining part of the joint-equipped units (the incomplete units 85, 810, 811, and 812) the joints 20 can be formed in an arrangement that includes the partial pattern P2A that is one part of the pattern P1A. By this means, the sealer applicator 30 that includes the plurality of nozzles 33 arranged in a pattern that is one part of the pattern P1A can set the joints 20 so as to be arranged in the shape of the pattern P1A and the shape of the partial pattern P2A described above. Hence, the operation for forming the joints 20 for joining the outer panel 3 and the inner panel 2 can be completed more quickly using the fixed patterns, and the productivity with respect to the automobile hood 1 can be increased.

In addition, according to the second embodiment, since six of the joints 20 are provided in a single unit 9, the rigidity supporting the outer panel 3 can be further increased, and thus the panel rigidity of the outer panel 3 can be further increased.

Further, according to the second embodiment, when applying the adhesive 21 that will serve as the joints 20 to the inner panel 2 as the application target, the adhesive 21 is applied in the arrangement of the predetermined pattern P1A to the inner panel 2 by repeating an operation which supplies a joint 20 from all of the nozzles 33 simultaneously, and joints 20 are formed in a pattern that is one part (the partial pattern P2A) of the predetermined pattern P1A on the inner panel 2 by supplying the adhesive 21 from some of the nozzles 33. According to this configuration, the joints 20 can be formed in an arrangement that includes the single pattern P1A in some of the j oint-equipped units (the incomplete units 84 and 89, and each unit 9), and in the remaining part of the joint-equipped units (the incomplete units 85, 810, 811, and 812) the joints 20 can be formed in an arrangement (the partial pattern P2A) that includes one part of the pattern P1A. Thus, by using the single applicator 30 having the plurality of nozzles 33, the operation for forming the joints 20 for joining the outer panel 3 and the inner panel 2 can be completed more quickly using the fixed patterns, and the productivity with respect to the automobile hood 1 can be increased.

### <First Modification of Second Embodiment>

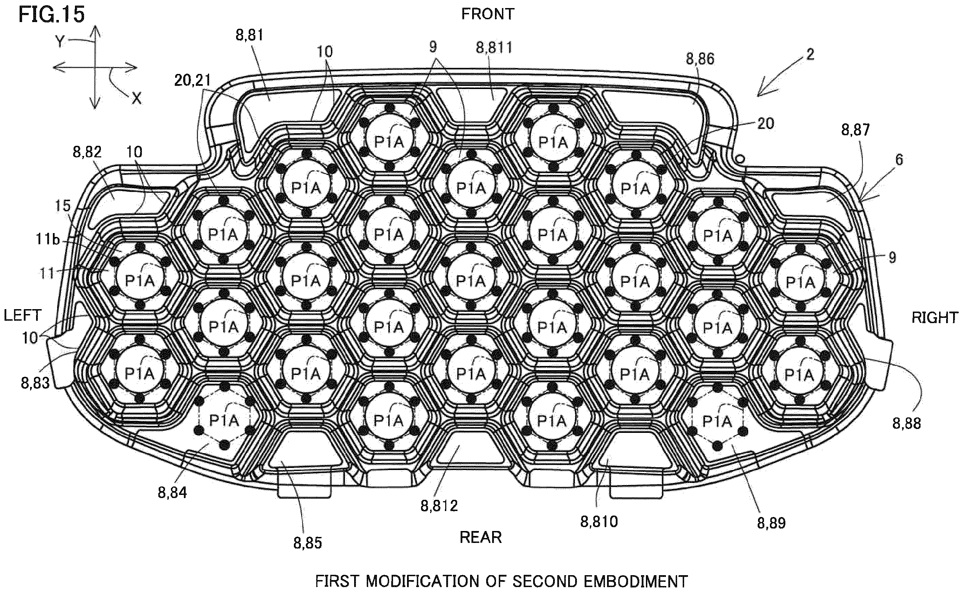

In the second embodiment that is described above, a form in which the joints 20 are set in the partial pattern P2A in addition to the pattern P1A was described as an example. However, a different form may be adopted. For example, as illustrated in Figure 15 that is a diagram for describing a first modification of the second embodiment, the arrangement in the partial pattern P2A need not be provided. In this modification, a predetermined second form is provided. The term "second form" refers to a form in which a plurality of the joints 20 are arranged in an arrangement including the predetermined pattern P1A in each of the j oint-equipped units (all of the units 9 and the incomplete units 84 and 89). In the present modification, six of the joints 20 are arranged in each of the j oint-equipped units. A process for realizing the arrangement of the joints 20 illustrated in this modification corresponds to a process in which the process for applying the adhesive 21 that will serve as the joints 20 in the partial pattern P2A is omitted when performing the process for applying the adhesive 21 in the second embodiment.

As described above, according to the first modification of the second embodiment, in the second form, the joints 20 can be formed in an arrangement that includes the single pattern P1A in each of the joint-equipped units (units 9). By this means, the operation for forming the joints 20 for joining the outer panel 3 and the inner panel 2 can be completed more quickly using the fixed pattern, and the productivity with respect to the automobile hood 1 can be increased.

### <Second Modification of Second Embodiment>

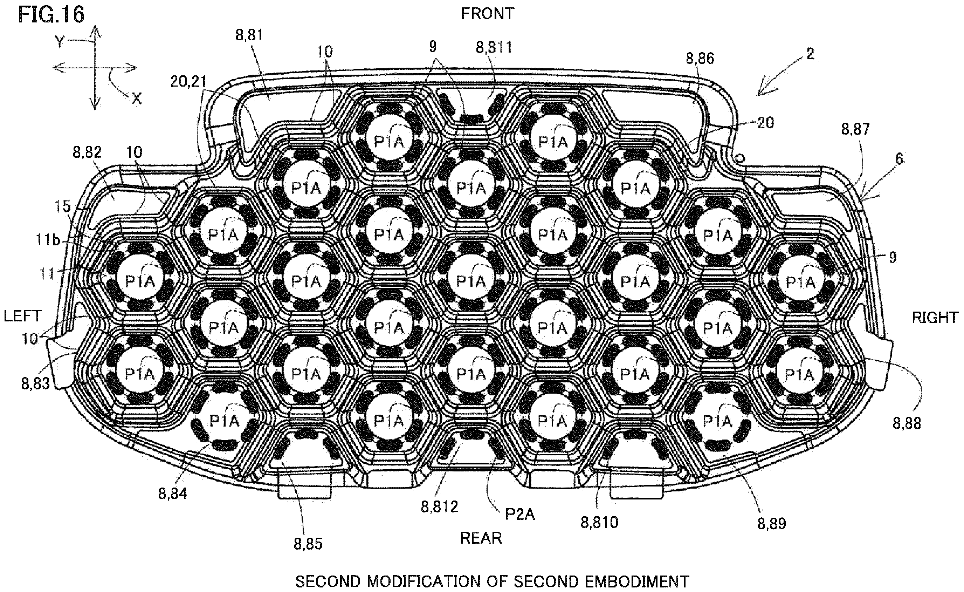

In the second embodiment and modification described above, forms in which the arrangement pattern P1A of the respective joints 20 is a dotted pattern were described as examples. However, a different form may be adopted. For example, as illustrated in Figure 16 that is a diagram for describing a second modification of the second embodiment, an arrangement pattern of the respective joints 20 may be a linear pattern P1A having six or more lines.

In the modification illustrated in Figure 16, the respective joints 20 are arranged on a virtual circle with a predetermined interval therebetween, and are formed in an arc shape. When realizing the arrangement of the joints 20 illustrated in this modification, in addition to causing the nozzles 33 and the application target (the inner panel 2) to move relative to each other in the same manner as the manner described in the second embodiment, when discharging the adhesive 21 onto the joint-equipped unit (unit 9) simultaneously from the three nozzles 33, the three nozzles 33 are rotated about the Z1 axis with respect to the application target (the inner panel 2). By this means, the adhesive 21 is discharged from the nozzles 33 in a manner so that the adhesive 21 describes an arc. Note that, each of the adhesives 21 may be formed in a linear shape, or may be formed in another shape such as a waveform shape.

Note that, although in the second embodiment and the modifications a form in which the joints 20 are formed with the applicator 30 having the three nozzles 33 arranged in the triangular pattern P1 described in the first embodiment was described as an example, a different form may be adopted. For example, the joints 20 may be formed using an applicator including six of the nozzles 33 arranged in the same pattern as the pattern P1A. In such case, when forming the joints 20 in the arrangement of the pattern P1A, the adhesive 21 that will serve as the joints 20 is discharged from the six nozzles 33 simultaneously. At such time, the nozzles 33 need not be rotated about the Z1 axis. Further, when forming the joints 20 in the arrangement of the partial pattern P2A, the adhesive 21 that will serve as the joints 20 is discharged simultaneously from three of the nozzles 33.

More specifically, the adhesive 21 arranged in the pattern P1A can be applied by an operation that discharges the adhesive once from each of the six nozzles 33 to the places where the joints 20 are to be formed in the pattern P1A. Further, the adhesive 21 arranged in the partial pattern P2A can be applied by an operation that discharges the adhesive once from each of the three nozzles 33 corresponding to the partial pattern P2A to the places where the partial pattern P2A is to be formed. In this case also, the relative positions of the plurality (six) of nozzles 33 are fixed.

Further, in the second embodiment and the modifications, a form in which the adhesive 21 is applied by the nozzles 33 that traverse the inner panel 2 by moving in the longitudinal direction Y as a rectilinear direction as viewed in the sheet thickness direction was described as an example. However, a different form may be adopted. For example, as illustrated by an arrow A2 in Figure 14, the adhesive 21 may be supplied (applied) to each unit 9 and corresponding incomplete units 8 (a plurality of places) by each nozzle 33 moving in the longitudinal direction Y while reciprocating in the cross direction X with respect to the overhanging structure 6 of the inner panel 2. In this case, each nozzle 33 applies the adhesive 21 to a corresponding place on the overhanging structure 6 while moving in the cross direction X as a rectilinear direction. Further, after applying the adhesive 21 to one row of the units 9 and incomplete units 8 (joint-equipped units) which are arranged in an aligned relationship in the cross direction X and whose positions are aligned in the longitudinal direction Y, each nozzle 33 moves in the longitudinal direction Y by an amount corresponding to an arrangement pitch D between two of the units 9 and 9 that are adjacent in the longitudinal direction Y (diagonally forward direction). Thereafter, each nozzle 33 again applies the adhesive 21 at a corresponding place on the overhanging structure 6 while moving in the cross direction X as a rectilinear direction.

Further, for example, as illustrated by an arrow A3 in Figure 14, the adhesive 21 may be supplied (applied) to each unit 9 and corresponding incomplete units 8 (a plurality of places) by each nozzle 33 moving in either one of the oblique directions C1 and C2 while reciprocating in the other of the oblique directions C1 and C2 with respect to the overhanging structure 6 of the inner panel 2. In this case, each nozzle 33 applies the adhesive 21 to a corresponding place on the overhanging structure 6 while moving in either one of the oblique directions C1 and C2 as a rectilinear direction. Further, after applying the adhesive 21 to one row of the units 9 and incomplete units 8 (joint-equipped units) which are arranged in an aligned relationship in either one of the oblique directions C1 and C2, each nozzle 33 moves in the other of the oblique directions C1 and C2 by an amount corresponding to an arrangement pitch between two of the units 9 and 9 that are adjacent in the other of the oblique directions C1 and C2. Thereafter, each nozzle 33 again applies the adhesive 21 at a corresponding place on the overhanging structure 6 while moving in either one of the oblique directions C1 and C2.

### <Third Modification of Second Embodiment>

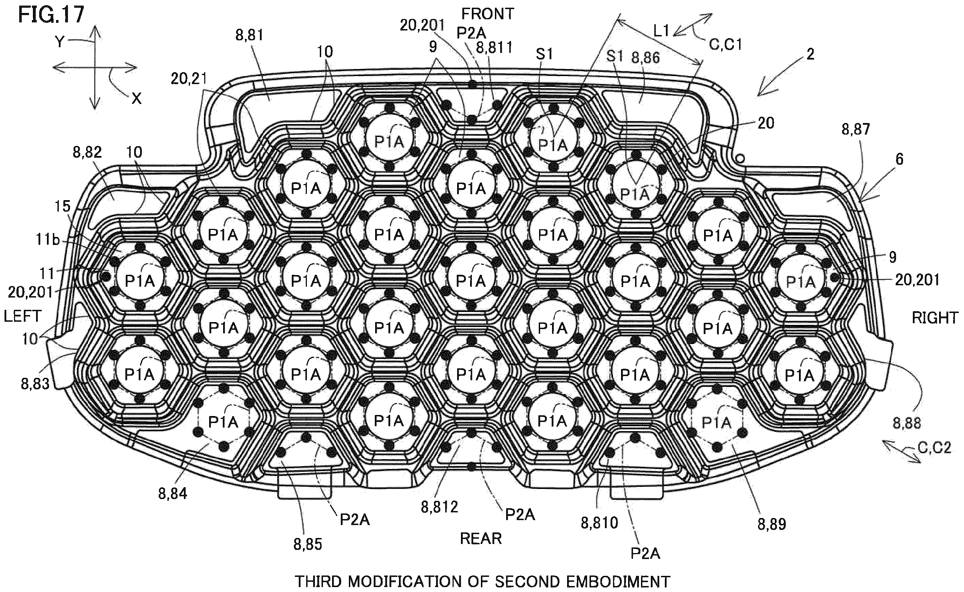

In the embodiment and modifications described above, forms in which all of the joints 20 belong to the pattern P1A or the partial pattern P2A were described as examples. However, a different form may be adopted. In a modification illustrated in Figure 17, a joint 20 which does not belong to either of the pattern P1A and the partial pattern P2A may be provided. In the modification illustrated in Figure 17, in addition to the arrangement of the joints 20 illustrated in the second embodiment, for example, four joints 20 (201) are added. Specifically, as a joint-equipped unit, an additional-joint-equipped unit is provided which, in addition to having the joints 20 in the pattern P1A or the partial pattern P2A, also has a joint 20 (201) which is arranged at a place that deviates from the layout of the joints 20 in the pattern P1A.

In this modification, for example, in each of the units 9 and 9 that are the outermost units 9 in the cross direction X, the joint 201 is provided in addition to the joints 20 of the pattern P1A. Further, in this modification, in the incomplete units 811 and 812 which are located at positions which are at the center in the cross direction X and are at the front end and rear end, respectively, the joint 201 is provided in addition to the joints 20 of the partial pattern P2A. Each of these joints 201 is formed by applying the adhesive 21 at a place that deviates from the layout of the adhesive 21 in the pattern P1A or the partial pattern P2A in a process that is prior to or a process that is after the aforementioned application process in which the joints 20 in the pattern P1A or the partial pattern P2A are applied using the plurality of nozzles 33.

According to this modification, by additionally providing the joints 201 in addition to the joints 20, it is possible to further increase the balance of the joining strength between the inner panel 2 and the outer panel 3. As a result, the panel rigidity and the dent resistance of the outer panel 3 can be further increased.

Furthermore, according to this modification, by the simple and brief process of additionally applying a small number of the joints 201 (the adhesive 21) which is performed before or after the process of applying the adhesive 21 that will serve as the joints 20 in the pattern P1A and the partial pattern P2A, the panel rigidity and the dent resistance of the outer panel 3 can be further increased.

### <Third Embodiment>

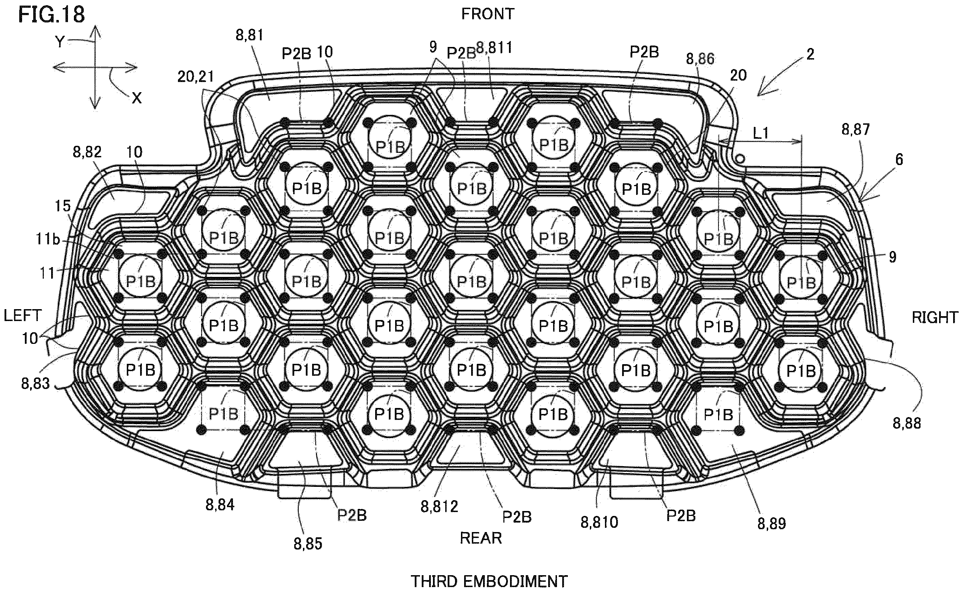

Figure 18 is a view for describing an arrangement of the joints 20 pertaining to a third embodiment. The inner panel 2 and the outer panel 3 of the third embodiment are the same as in the first embodiment. On the other hand, in the third embodiment, the joint 20 is provided on the flanges 11 of each unit 9 and some of the incomplete units 8 (81, 84, 85, 86, 89, 810, 811, and 812) of the inner panel 2. The incomplete units 8 and the units 9 in which the joint 20 is provided are joint-equipped units. Thus, in the third embodiment, the plurality of incomplete units 8 and units 9 include a plurality of the j oint-equipped units.

In the third embodiment, similarly to the first embodiment, the panel rigidity and the dent resistance of the outer panel 3 can be increased by the flanges 11 which are parts of the inner panel 2 which project to the outer panel 3 side being joined to the outer panel 3 through the joints 20.

In the third embodiment, a first form is provided. The term "first form" refers to a form in which the joints 20 are arranged in an arrangement including a predetermined pattern P1B in some of the joint-equipped units (the units 9 and the incomplete units 84 and 89), and in the remaining joint-equipped units (the incomplete units 81, 85, 86, 810, 811, and 812) the joints 20 are arranged in an arrangement (arrangement of a partial pattern P2B) including a part of the predetermined pattern P1B.

In the third embodiment, the predetermined pattern P1B is a dotted pattern with four dots. The pattern P1B is a rectangular pattern as viewed in the sheet thickness direction of the outer panel 3, and is a pattern that is not one straight line.

The predetermined pattern P1B is set to the same size in each of a plurality of joint-equipped units. In other words, the pattern P1B is set to the same size in each of the joint-equipped units in which the joints 20 in the pattern P1B are arranged. In addition, in the present embodiment, the pattern P1B is set so as to have the same orientation as viewed in the sheet thickness direction in each of the joint-equipped units in which the joints 20 in the pattern P1B are arranged. In the present embodiment, in the pattern P1B, the joints 20 are arranged at four places which are places at the right front, the left front, the right rear, and the left rear as viewed in the sheet thickness direction. As viewed in the sheet thickness direction, the relative positions of (relative distances between) the four joints 20 in one pattern P1B are common to the plurality of patterns P1B.

Although the pattern P1B of the third embodiment is a regular tetragonal pattern, the pattern P1B may be a tetragonal pattern in which the length of at least one side is different from the lengths of the other sides. A dot-shaped joint 20 is arranged at each vertex of the pattern P1B. In the third embodiment, with regard to the joints 20 in one pattern P1B, the distance between the two joints 20 which are farthest from each other is preferably 200 mm or less from the viewpoint of sufficiently securing the panel rigidity and the dent resistance of the outer panel 3, and more preferably is 150 mm or less, and further preferably is 110 mm or less.

In the third embodiment, the joints 20 are arranged in an arrangement that includes one pattern P1B in one unit 9. By this means, a plurality of dot-shaped joints 20 are arranged in one unit 9. In the third embodiment, the joints 20 are arranged in the pattern P1B in all of the units 9. By this means, in the third embodiment, 15 or more of the patterns P1B are provided. In addition, in the third embodiment, the orientations of the patterns P1B in the respective units 9 are aligned with each other. Note that, the orientation of the pattern P1B may differ among the plurality of units 9. Further, a unit 9 in which the joint 20 is not provided may exist.

Further, as mentioned above, in the third embodiment, in some of the incomplete units, namely, the incomplete units 84 and 89, the joints 20 are arranged in the pattern P1B. Although in the third embodiment the orientation of the pattern P1B in each of the incomplete units 84 and 89 is aligned with the orientation of the pattern P1B in the units 9B, the orientation may be different therefrom. Further, in some of the incomplete units, namely, the incomplete units 81, 85, 86, 810, 811, and 812, the joints 20 are arranged in the partial pattern P2B as an arrangement including a part of the pattern P1B, and in the present embodiment the joints 20 are arranged in an arrangement that is only a part of the pattern P1B. The partial pattern P2B in the incomplete units 81, 85, 86, 810, 811, and 812 is a pattern which connects two vertices among the rectangular pattern.

In the third embodiment, the joints 20 are arranged in a lattice shape. More specifically, the joints 20 are arranged on a virtual straight line along the cross direction X, and are arranged on a virtual straight line along the longitudinal direction Y.

In the third embodiment, the patterns P1B and the partial patterns P2B whose positions in the cross direction X are aligned are arranged at a constant pitch in the cross direction X (rectilinear direction), and furthermore, the patterns P1B and the partial patterns P2B whose positions in the longitudinal direction Y are aligned are arranged at a constant pitch in the longitudinal direction Y (rectilinear direction). Further, in the present embodiment, the patterns P1B and the partial patterns P2B are arranged at a constant pitch along each oblique direction C (C1 and C2; rectilinear direction) as a third direction. In the present embodiment, the patterns P1B and the partial patterns P2B arranged along the oblique direction C are arranged obliquely in the direction toward the right front side along the oblique direction C1 as viewed in the sheet thickness direction. Further, in the present embodiment, the patterns P1B and the partial patterns P2B are arranged obliquely in the direction toward the right rear side along the oblique direction C2 as viewed in the sheet thickness direction.

The foregoing is a description of the arrangement of the joints 20 in the third embodiment. An applicator 30B is used as an applicator for forming the joints 20 of the third embodiment. The applicator 30B has the same configuration as the configuration of the applicator 30 described in the first embodiment except for the point that four nozzles 33 are arranged in the head 31, and a supply mechanism 35 is independently connected to each nozzle 33. That is, the joints 20 arranged in an arrangement that includes the pattern P1B and in an arrangement that includes the partial pattern P2B can be realized by using the applicator 30B having the four nozzles 33 which are arranged at the four vertices of a rectangular shape.

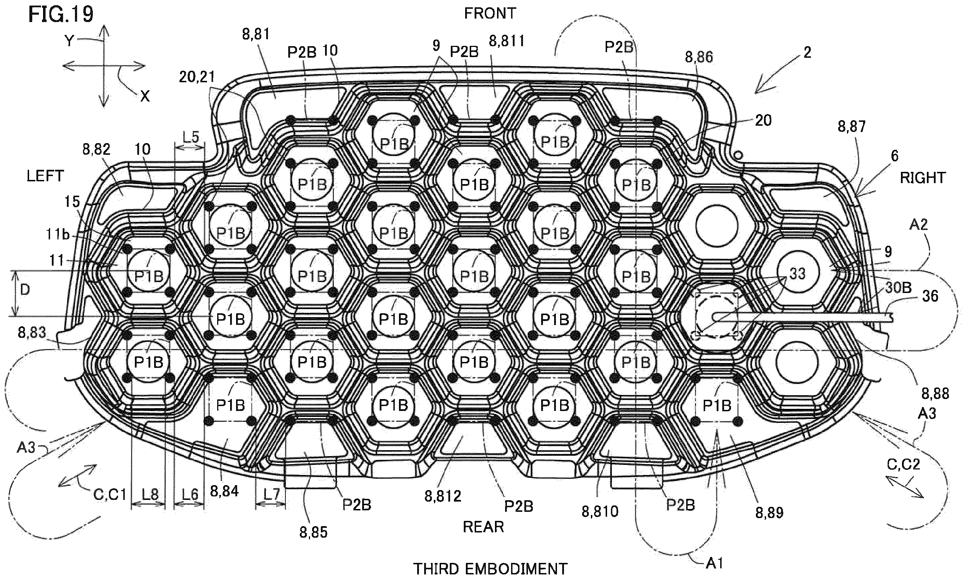

Figure 19 is a schematic plan view for describing the manner in which the applicator 30B applies the adhesive 21 in the third embodiment. Referring to Figure 19, in a formation process for forming the joints 20 in the third embodiment, first, the inner panel 2 or the outer panel 3 as the application target is placed on an unshown workbench. In the third embodiment, a state in which the inner panel 2 as the application target is placed on a workbench is illustrated. Next, upon the control portion 37 reading and executing the aforementioned program, an operation for applying the adhesive 21 that will serve as the joints 20 is performed.

In the operation for applying the adhesive 21, the adhesive 21 is applied to the application target (in the third embodiment, the inner panel 2) using the applicator 30B including the plurality of nozzles 33 which are arranged in an arrangement that includes the predetermined pattern P1B. In the third embodiment, the applicator 30B moves each nozzle 33 of the head 31 in the cross direction X, the longitudinal direction Y, and the height direction Z with respect to the inner panel 2 by operation of the position changing mechanism 36. By this means, the positions of the respective nozzles 33 are changed to places where the joints 20 are to be set on the inner panel 2. Each nozzle 33 is configured to form the joint 20 in each unit 9 and the corresponding incomplete units 8 by, for example, moving in the cross direction X while reciprocating in the longitudinal direction Y with respect to the overhanging structure 6 of the inner panel 2 as indicated by an arrow A1.

When applying the adhesive 21 to the flanges 11 of the units 9 and when applying the adhesive 21 to the flanges 11 of the incomplete units 84 and 89, the applicator 30B supplies the adhesive 21 from all of the nozzles 33 simultaneously to thereby form the joints 20 in the predetermined pattern P1B on the inner panel 2.

Further, when applying the joints 20 onto the incomplete units 81, 85, 86, 810, 811, and 812, the applicator 30B supplies the adhesive 21 from two of the nozzles 33 to thereby apply the adhesive 21 to the inner panel 2 in an arrangement that corresponds to one part of the predetermined pattern P1B, that is, the partial pattern P2B.

After the adhesive 21 is applied to the inner panel 2 by the configuration described above, the inner panel 2 and the outer panel 3 are fitted together using a robot arm (not illustrated) or the like. By this means, at least some of the adhesive 21 contacts both the inner panel 2 and the outer panel 3 to form the joints 20, and the joints 20 join together these panels 2 and 3. Thereafter, for example, assembly of the automobile hood 1 is completed by subjecting the outer circumferential edge part of the outer panel 3 to hemming or the like.

In the third embodiment also, similar advantageous effects as the advantageous effects of the first embodiment are obtained. That is, in the first form in the third embodiment, the joints 20 can be formed in the arrangement of the single pattern P1B in some of the joint-equipped units (the incomplete units 84 and 89, and the units 9), and in the remaining part of the joint-equipped units (the incomplete units 81, 85, 86, 810, 811, and 812) the joints 20 can be formed in an arrangement (the partial pattern P2B) that includes one part of the pattern P1B. By this means, the sealer applicator 30B that includes the plurality of nozzles 33 arranged in the predetermined pattern P1B can form the joints 20 so as to be arranged in the aforementioned shape of the pattern P1B and in a shape (shape of the partial pattern P2B) that is one part of the pattern P1B. Hence, the operation for forming the joints 20 for joining the outer panel 3 and the inner panel 2 can be completed more quickly using the fixed patterns, and the productivity with respect to the automobile hood 1 can be increased.

Further, according to the third embodiment, when applying the adhesive 21 to the inner panel 2 as the application target, the adhesive 21 is applied in the arrangement of the predetermined pattern P1B to the inner panel 2 by repeating an operation which supplies the adhesive 21 from all of the nozzles 33 simultaneously, and joints 20 are formed in an arrangement that is one part (the partial pattern P2B) of the predetermined pattern P1B on the inner panel 2 by supplying the adhesive 21 from some of the nozzles 33. According to this configuration, the joints 20 can be formed in the single pattern P1B in some of the joint-equipped units (the incomplete units 84 and 89, and each unit 9), and in the remaining part of the joint-equipped units (the incomplete units 81, 85, 86, 810, 811, and 812) the joints 20 can be formed in an arrangement that includes one part of the pattern P1B. Thus, by using the single applicator 30B having the plurality of nozzles 33, the operation for forming the joints 20 for joining the outer panel 3 and the inner panel 2 can be completed more quickly using the fixed patterns, and the productivity with respect to the automobile hood 1 can be increased.

Note that, in the third embodiment, a form in which each nozzle 33 moves in the cross direction X while reciprocating in the longitudinal direction Y with respect to the inner panel 2 was described as an example. However, a different form may be adopted. For example, as illustrated by an arrow A2, each nozzle 33 may move in the longitudinal direction Y while reciprocating in the cross direction X with respect to the inner panel 2. In this case, the adhesive 21 may be applied using two nozzles 33 arranged in an aligned relationship in the longitudinal direction Y among the four nozzles 33. In this case, the adhesive 21 is applied to each unit 9 and the incomplete units 84 and 89 by the two nozzles 33 performing an operation to discharge a joint twice. Further, in the third embodiment, a pitch L5 between two joints 20 and 20 that are closest between the units 9 and 9 that are adjacent in the cross direction X, a pitch L6 between two joints 20 and 20 that are closest between the unit 9 and the incomplete unit 8 that are adjacent in the cross direction X, and a pitch L7 between two joints 20 and 20 that are closest between the incomplete units 8 and 8 that are adjacent in the cross direction X are each shorter than a pitch L8 between the joints 20 that are adjacent in the cross direction X in a single unit 9.

As a result, in some cases the adhesive 21 can be supplied to the application target (in the third embodiment, the inner panel 2) while causing the plurality of nozzles 33 to move by an interval that is shorter than the interval between a plurality of the nozzles 33 and 33. By this means, the joints 20 can be arranged at a shorter pitch, and the panel rigidity and the dent resistance of the inner panel 2 can be further increased.

### <First Modification of Third Embodiment>

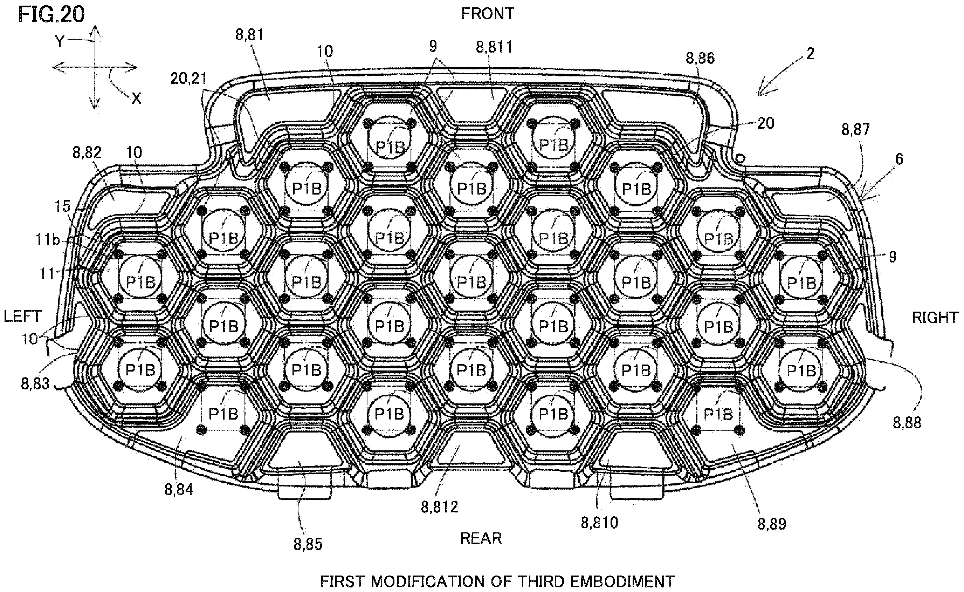

In the third embodiment that is described above, a form in which the adhesive 21 that will serve as the joints 20 is applied in the partial pattern P2B in addition to the pattern P1B was described as an example. However, a different form may be adopted. For example, as illustrated in Figure 20 that is a diagram for describing a first modification of the third embodiment, the arrangement in the partial pattern P2B need not be provided. In this modification, a predetermined second form is provided. The term "second form" refers to a form in which a plurality of the joints 20 are arranged in an arrangement including the predetermined pattern P1B in each of the joint-equipped units (all of the units 9 and the incomplete units 84 and 89). In the present modification, four of the joints 20 are arranged in all of the joint-equipped units. A process for realizing the arrangement of the joints 20 illustrated in this modification corresponds to a process in which the process for applying the adhesive 21 in the partial pattern P2B is omitted in the third embodiment.

As described above, according to the first modification of the third embodiment, in the second form, the joints 20 can be formed in the single pattern P1B in each of the joint-equipped units (the units 9 and the incomplete units 84 and 89). By this means, the operation for forming the joints 20 for joining the outer panel 3 and the inner panel 2 can be completed more quickly, and the productivity with respect to the automobile hood 1 can be increased.

### <Second Modification of Third Embodiment>

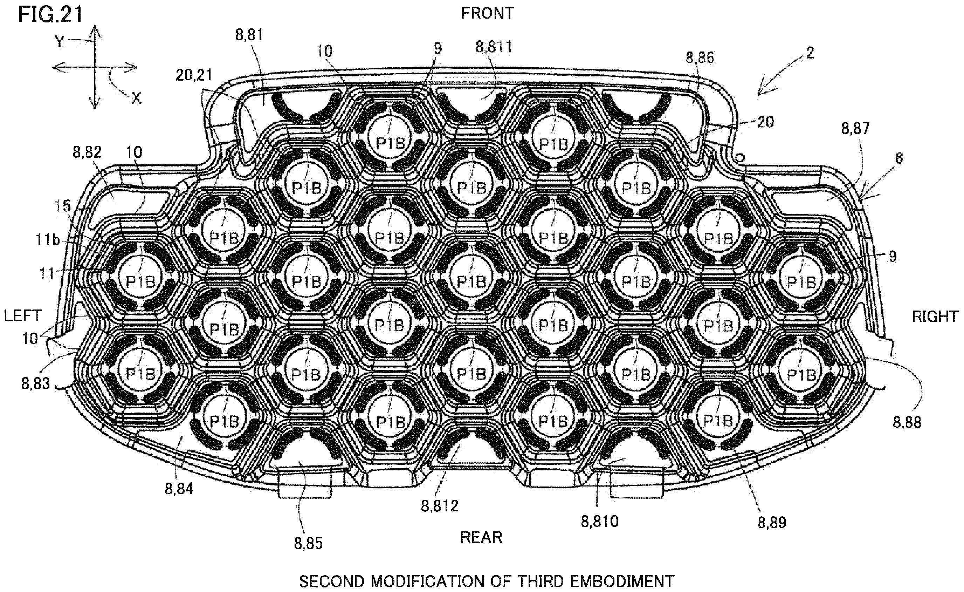

In the third embodiment and modification described above, forms in which the arrangement pattern P1B of the respective joints 20 is a dotted pattern were described as examples. However, a different form may be adopted. For example, as illustrated in Figure 21 that is a diagram for describing a second modification of the third embodiment, an arrangement pattern of the respective joints 20 may be a linear pattern P1B having four or more lines.

In the modification illustrated in Figure 21, the respective joints 20 are arranged on a virtual circle with a predetermined interval therebetween, and are formed in an arc shape. When realizing the arrangement of the joints 20 illustrated in this modification, in addition to causing the nozzles 33 and the application target (the inner panel 2) to move relative to each other in the same manner as the manner described in the third embodiment, when discharging the adhesive 21 onto each joint-equipped unit (units 9 and incomplete units 84 and 89) from the four nozzles 33 simultaneously, the four nozzles 33 are rotated about the Z 1 axis with respect to the application target (the inner panel 2). By this means, the adhesive 21 is discharged from the nozzles 33 in a manner so that the adhesive 21 describes an arc. Note that, each of the adhesives 21 (the joints 20) may be formed in a linear shape, or may be formed in another shape such as a waveform shape.

Further, in the third embodiment and the modifications described above, forms in which the adhesive 21 is applied by the nozzles 33 that traverse the inner panel 2 by moving in the longitudinal direction Y or the cross direction X as rectilinear directions as viewed in the sheet thickness direction were described as examples. However, a different form may be adopted. For example, as illustrated by an arrow A3 in Figure 19, the adhesive 21 may be supplied (applied) to each unit 9 and corresponding incomplete units 8 (a plurality of places) by each nozzle 33 moving in either one of the oblique directions C1 and C2 while reciprocating in the other of the oblique directions C1 and C2 with respect to the overhanging structure 6 of the inner panel 2. In this case, each nozzle 33 applies the adhesive 21 to a corresponding place on the overhanging structure 6 while moving in either one of the oblique directions C1 and C2 as a rectilinear direction. Further, after applying the adhesive 21 to one row of the units 9 and incomplete units 8 (joint-equipped units) which are arranged in an aligned relationship in either one of the oblique directions C1 and C2, each nozzle 33 moves in the other of the oblique directions C1 and C2 by an amount corresponding to an arrangement pitch between two of the units 9 and 9 that are adjacent in the other of the oblique directions C1 and C2. Thereafter, each nozzle 33 again applies the adhesive 21 at a corresponding place on the overhanging structure 6 while moving in either one of the oblique directions C1 and C2.

### <Third Modification of Third Embodiment>

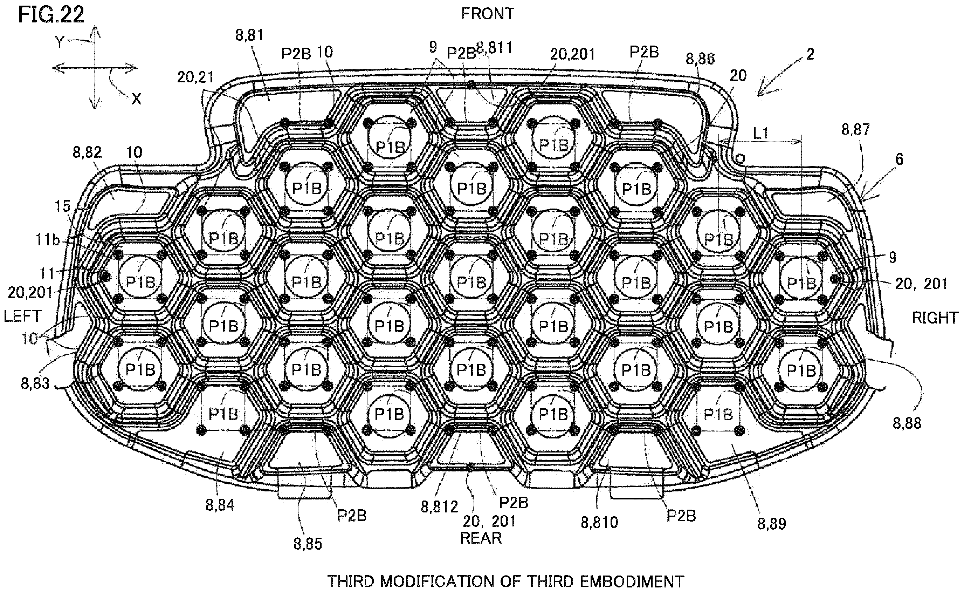

In the embodiment and modifications described above, forms in which all of the joints 20 belong to the pattern P1B or the partial pattern P2B were described as examples. However, a different form may be adopted. In a modification illustrated in Figure 22, a joint 20 which does not belong to either of the pattern P1B and the partial pattern P2B may be provided. In the modification illustrated in Figure 22, in addition to the arrangement of the joints 20 illustrated in the third embodiment, for example, four joints 20 (201) are added. Specifically, as a joint-equipped unit, an additional-joint-equipped unit is provided which, in addition to having the joints 20 in the pattern P1B or the partial pattern P2B, also has a joint 20 (201) which is arranged at a place that deviates from the layout of the joints 20 in the pattern P1B.

In this modification, for example, in each of the units 9 and 9 that are the outermost units 9 in the cross direction X, the joint 201 is provided in addition to the joints 20 in the pattern P1B. Further, in this modification, in the incomplete units 811 and 812 which are located at positions which are at the center in the cross direction X and are at the front end and rear end, respectively, the joint 201 is provided in addition to the joints 20 of the partial pattern P2B. Each of these joints 201 is formed by applying the adhesive 21 at a place that deviates from the layout of the adhesive 21 in the pattern P1B or the partial pattern P2B in a process that is prior to or a process that is after the aforementioned application process in which the joints 20 in the pattern P1B or the partial pattern P2B are applied using the plurality of nozzles 33.

According to this modification, by additionally providing the joints 201 in addition to the joints 20, it is possible to further enhance the balance of the joining strength between the inner panel 2 and the outer panel 3. As a result, the panel rigidity and the dent resistance of the outer panel 3 can be further increased.

Furthermore, according to this modification, by the simple and brief process of additionally applying a small number of the joints 201 (the adhesive 21) which is performed before or after the process of applying the adhesive 21 that will serve as the joints 20 in the pattern P1B and the partial pattern P2B, the panel rigidity and the dent resistance of the outer panel 3 can be further increased.

### <Other Modification>

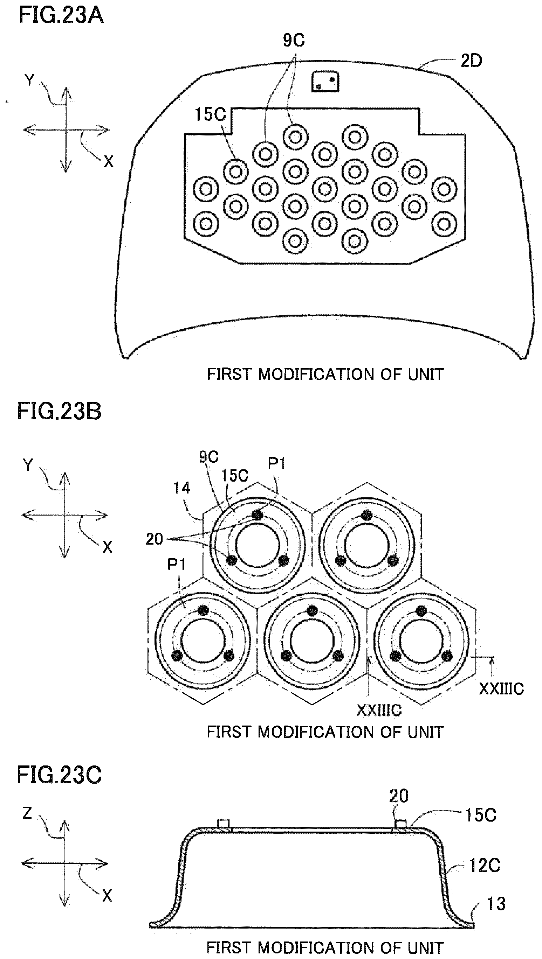

(1) Although in each embodiment and modification described above, a form in which 15 or more of the patterns P1, P1A, or P1B are provided was described as an example, the number of the patterns P1, P1A, or P1B may be less than 15.
(2) Further, in each embodiment and modification described above, a form in which an inner panel is the inner panel 2 was described as an example. However, a different form may be adopted. A stiffener formed of a steel sheet, an aluminum sheet, or a synthetic resin may be used as the inner panel. Note that, in a case where the automobile panel is a back door, examples of the inner panel that can be mentioned include a back door inner panel and a stiffener. Further, in a case where the automobile panel is a roof panel, examples of the inner panel that can be mentioned include a roof reinforcement and a stiffener.
(3) Further, in the modifications in which the additional joints 201 are provided, the adhesive 21 that will serve as the joints 201 may be supplied from the nozzles 33 in the course of applying the adhesive 21 that will serve as the joints 20 other than the joints 201.
(4) Further, in each embodiment and modification described above, a configuration in which each unit 9 is a hexagon as viewed in the sheet thickness direction was described as an example. However, a different configuration may be adopted. Each unit 9 may be circular as viewed in the sheet thickness direction. Figure 23A is a schematic plan view of an inner panel 2D that illustrates a principal part of a first modification of the units. Figure 23B is a plan view illustrating a principal part of Figure 23A. Figure 23C is a cross-sectional view along a line XXIIIC-XXIIIC in Figure 23B.

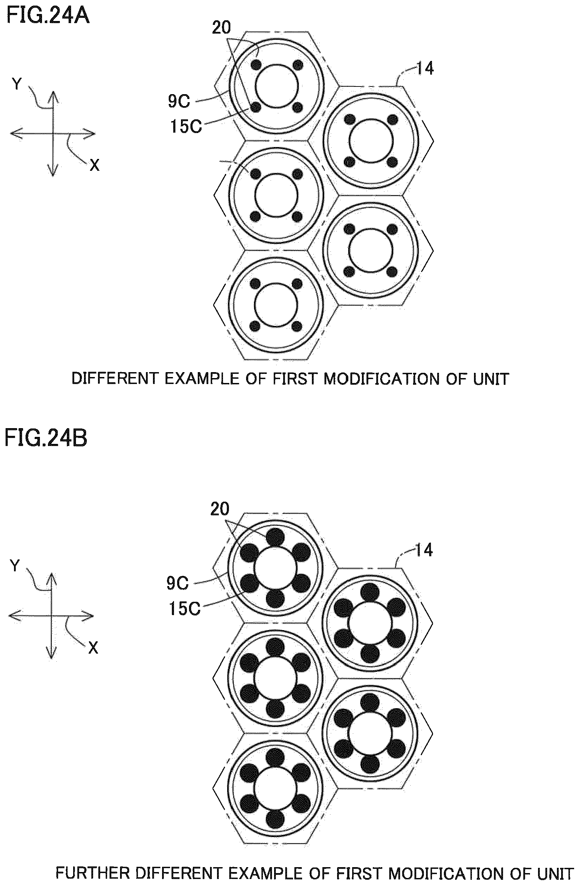

Referring to Figure 23A to Figure 23C, in a first modification of the units, a unit 9C is provided instead of the unit 9. The outer shape of an annular flange 15C and an inclined wall 12C of each unit 9C is circular as a whole. In this modification, a cylindrical inclined wall 12C and an annular flange 15C which is ring-shaped are provided in each unit 9C. The arrangement of the respective units 9C is the same as the arrangement of the units 9 in each of the above embodiments and modifications. Further, the arrangement of the joints 20 on the annular flange 15C of each unit 9C is the same as the arrangement described in the respective embodiments and modifications, and three joints 20 may be arranged in one unit 9C as illustrated in Figure 23B, four joints 20 may be arranged in one unit 9C as illustrated in Figure 24A, or six joints 20 may be arranged in one unit 9C as illustrated in Figure 24B. Note that, the inclined wall 12C and the annular flange 15C may have, in plan view, an annular shape in which the radius of curvature is not constant, such as an elliptical annular shape.

Thus, it can be said that the panel rigidity and the dent resistance of the outer panel 3 in a case where each unit 9C is circular as viewed in the sheet thickness direction is substantially the same as the panel rigidity and the dent resistance of the outer panel 3 in a case where each unit 9 is hexagonal as viewed in the sheet thickness direction.

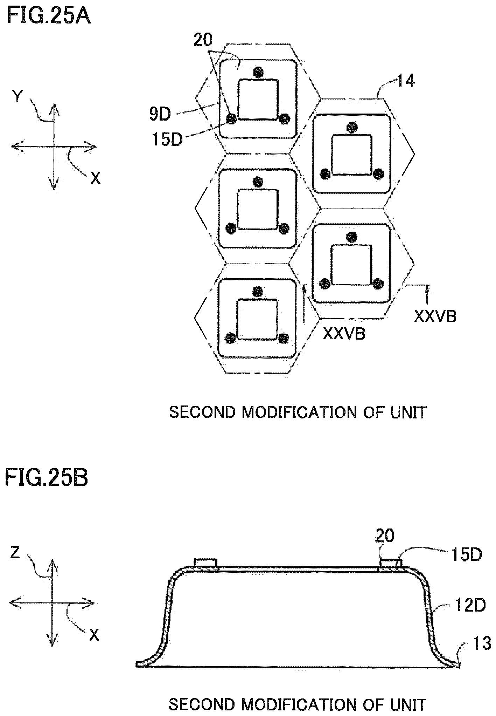

(5) Further, in each embodiment and modification described above, a configuration in which each unit 9 is a hexagon as viewed in the sheet thickness direction was described as an example. However, a different configuration may be adopted. Each unit may be rectangular as viewed in the sheet thickness direction. Figure 25A is a schematic plan view illustrating a principal part of a second modification of the units. Figure 25B is a cross-sectional view along a line XXVB-XXVB in Figure 25A.

Referring to Figure 25A and Figure 25B, in a second modification of the units, the outer shape of an annular flange 15D and an inclined wall 12D of each unit 9D is rectangular as a whole. In this modification, a rectangular inclined wall 12D and a rectangular annular flange 15D are provided in each unit 9D. The arrangement of the respective units 9D is the same as the arrangement of the units 9 in each of the above embodiments and modifications. Further, the arrangement of the joints 20 on the annular flange 15D of each unit 9D is the same as the arrangement described in the respective embodiments and modifications, and three joints 20 may be arranged in one unit 9D as illustrated in Figure 25A, four joints 20 may be arranged in one unit 9D similarly to the unit 9, or six joints 20 may be arranged in one unit 9D similarly to the unit 9. Note that, in plan view, the inclined wall 12D and the annular flange 15D may be a polygon such as an equilateral triangle, a regular pentagon, or a regular n-gon (n is an integer equal to or greater than 7).

Thus, it can be said that the panel rigidity and the dent resistance of the outer panel 3 in a case where each unit 9D is rectangular as viewed in the sheet thickness direction is substantially the same as the panel rigidity and the dent resistance of the outer panel 3 in a case where each unit 9 is hexagonal as viewed in the sheet thickness direction.

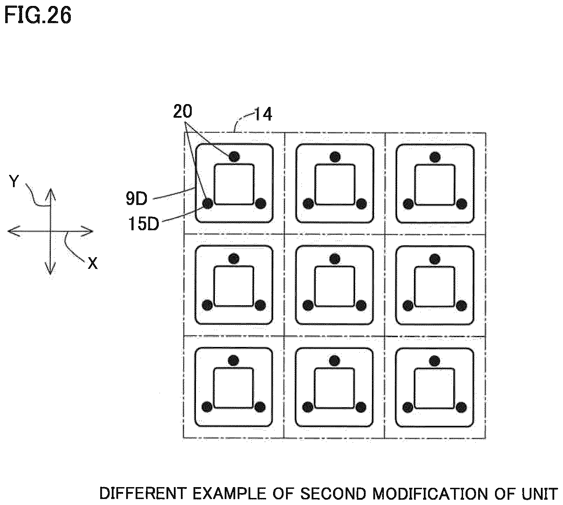

Further, as illustrated in Figure 26, the units 9D may be arranged so that the unit boundaries 14 are a rectangle and not a hexagon. That is, the units 9D may be arranged in a matrix.

### EXAMPLES

The applicator 30 of the first embodiment, the applicator 30B of the third embodiment, and the inner panels 2 were prepared.

Next, in a state in which the inner panel 2 was fixed, the adhesive 21 to serve as the joints 20 was applied to units 9 and incomplete units 8 of the inner panel 2 so as to form the arrangement illustrated in either one of the first embodiment, the second embodiment, and the third embodiment using either the applicator 30 or the applicator 30B. Thereafter, the inner panel 2 and the outer panel 3 were superposed with respect to each other, and the outer circumferential edge part of the outer panel 3 was then subjected to hemming to thereby complete the assembly of automobile panels of Within-range-examples 1 to 11 and Outside-range-examples 1 to 8. Note that, all of the Within-range-examples 1 to 11 had the properties described as a preferable range in the embodiments or modifications. On the other hand, the properties of the Outside-range-examples 1 to 8 deviated from at least one of the properties described as a preferable range in the embodiments or modifications.

### <Shape of unit>

The shapes of the respective units 9 (9, 9C, 9D) in the Within-range-examples 1 to 11 and the Outside-range-examples 1 to 8 were as follows:
Within-range-examples 1 to 6 and Outside-range-examples 1 to 6: the hexagonal unit 9 in the first embodiment illustrated in Figure 7
Within-range-examples 7 to 9 and Outside-range-example 7: the circular unit 9C in the first modification of unit illustrated in Figure 23A to Figure 23C
Within-range-examples 10 and 11 and Outside-range-example 8: the unit 9D in the second modification of the unit illustrated in Figure 25A and Figure 25B

### <Arrangement pattern of joints>

The arrangement patterns of the joints 20 were as follows:
Within-range-examples 1 to 3, 7, 10 and Outside-range-examples 1 to 6, 7, 8: the arrangement pattern of the first embodiment illustrated in Figure 7 (pattern with three dots)
Within-range-examples 4 and 8 and Outside-range-example 11: the arrangement pattern of the third embodiment illustrated in Figure 18 (pattern with four dots)
Within-range-examples 5, 6, 9: the arrangement pattern of the second embodiment illustrated in Figure 13 (pattern with six dots)

In each of the Within-range-examples 1 to 11 and the Outside-range-examples 1 to 8, a distance L1 between the centers (central axes S1 and S1) as viewed in the sheet thickness direction of two units 9 and 9 adjacent to each other was as shown in Table 1. Further, in the Within-range-examples 1 to 11 and the Outside-range-examples 1 to 8, the outer panel 3 and the inner panel 2 were steel sheets, and the yield strength and sheet thickness of the outer panel 3 and the sheet thickness of the inner panel 2 were as shown in Table 1.

### <Test and evaluation of panel rigidity and dent resistance>

The panel rigidity of the Within-range-examples 1 to 11 and the Outside-range-examples 1 to 8 was measured. Measurement of the panel rigidity was performed as follows. Specifically, a load of 90 N was applied to the surface of the outer panel 3 using a spherical iron indenter with a diameter of 100 mm. In the Within-range-examples 1 to 11 and the Outside-range-examples 1 to 8, the place where the load was applied was on the upper face 3b of the outer panel 3 and was a place located on the central axis S1 of the flange 11 of the unit 9 (see Figure 6). If the maximum value of deflection of the outer panel 3 when the aforementioned load was applied was 7 mm or less, the panel rigidity was evaluated as "0" (very good), and if the maximum value of deflection was more than 7 mm the panel rigidity was evaluated as "△" (good).

The dent resistance of the Within-range-examples 1 to 11 and the Outside-range-examples 1 to 8 was also measured. Measurement of the dent resistance was performed as follows. Specifically, when a dent having a depth of 0.15 mm was generated on the surface of the outer panel 3 by a spherical indenter made of hard rubber with a diameter of 50 mm, the load acting on the outer panel from the indenter was measured. In the Within-range-examples 1 to 11 and the Outside-range-examples 1 to 8, the place where the load was applied was on the upper face 3b of the outer panel 3 and was a place located on the central axis S1 of the flange 11 of the unit 9 (see Figure 6). If the aforementioned load was 200 N or more, the dent resistance was evaluated as "0" (very good), and if the load was less than 200 N the dent resistance was evaluated as "△" (good).

Further, the weight ratios with respect to the Within-range-examples 1 to 11 and the Outside-range-examples 1 to 8 were measured. The weight ratio was evaluated by taking the weight of Outside-range-example 1 as a reference, and if the rate of weight reduction from the reference was more than 20%, the weight ratio was evaluated as "⊙" (excellent), if the rate of weight reduction from the reference was 10% to 20%, the weight ratio was evaluated as "0" (very good), and if the rate of weight reduction from the reference was less than 10%, the weight ratio was evaluated as "△" (good).

An overall evaluation was then performed. The overall evaluation was determined as "⊙" if the panel rigidity, dent resistance, and weight ratio had all been evaluated as either "○" or "⊙", and was determined as "○" if at least one of the panel rigidity, dent resistance, and weight ratio had been evaluated as "Δ".

The results are shown in Table 1.

### [Table 1]

**[Table 1]**

| Pattern | | Distance Between Centers of Adjacent Units (mm) | Outer Panel | | Inner Panel | Panel Rigidity | Dent Resistance | Weight Ratio | Overall Evaluation | Remarks |
|---|---|---|---|---|---|---|---|---|---|---|
| | | | Yield Strength (MPa) | Sheet Thickness (mm) | Sheet Thickness (mm) | | | | | |
| Honeycomb | Three Dots | 300 | 330 | 0.7 | 0.55 | ○ | ○ | Reference (△) | ○ | Outside-range-example 1 |
| | Three Dots | 130 | 580 | 0.4 | 0.4 | ○ | ○ | ⊚ | ⊚ | Within-range-example 1 |
| | Three Dots | 220 | 580 | 0.4 | 0.4 | △ | ○ | ⊚ | ○ | Outside-range-example 2 |
| | Three Dots | 130 | 430 | 0.55 | 0.4 | ○ | ○ | ○ | ○ | Within-range-example 2 |
| | Three Dots | 130 | 330 | 0.5 | 0.4 | ○ | △ | ⊚ | ○ | Outside-range-example 3 |
| | Three Dots | 130 | 580 | 0.4 | 0.4 | ○ | ○ | ⊚ | ⊚ | Within-range-example 3 |
| | Three Dots | 130 | 330 | 0.4 | 0.4 | ○ | △ | ⊚ | ○ | Outside-range-example 4 |
| | Three Dots | 130 | 580 | 0.7 | 0.4 | ○ | ○ | △ | ○ | Outside-range-example 5 |
| | Three Dots | 130 | 430 | 0.55 | 0.55 | ○ | ○ | △ | ○ | Outside-range-example 6 |
| | Four Dots | 130 | 580 | 0.4 | 0.4 | ○ | ○ | ⊚ | ⊚ | Within-range-example 4 |
| | Six Dots | 130 | 580 | 0.4 | 0.4 | ○ | ○ | ⊚ | ⊚ | Within-range-example 5 |
| | Six Dots | 160 | 580 | 0.5 | 0.4 | ○ | ○ | ⊚ | ⊚ | Within-range-example 6 |
| Circular | Three Dots | 130 | 580 | 0.4 | 0.4 | ○ | ○ | ⊚ | ⊚ | Within-range-example 7 |
| | Four Dots | 130 | 580 | 0.4 | 0.4 | ○ | ○ | ⊚ | ⊚ | Within-range-example 8 |
| | Six Dots | 130 | 580 | 0.4 | 0.4 | ○ | ○ | ⊚ | ⊚ | Within-range-example 9 |
| | Three Dots | 220 | 580 | 0.4 | 0.4 | △ | ○ | ⊚ | ○ | Outside-range-example 7 |
| Rectangular | Three Dots | 130 | 580 | 0.4 | 0.4 | ○ | ○ | ⊚ | ⊚ | Within-range-example 10 |
| | Four Dots | 130 | 580 | 0.4 | 0.4 | ○ | ○ | ○ | ⊚ | Within-range-example 11 |
| | Three Dots | 220 | 580 | 0.4 | 0.4 | △ | ○ | ⊚ | ○ | Outside-range-example 8 |

| | | | | | | | | | | |
|---|---|---|---|---|---|---|---|---|---|---|
| An underline indicates the value is outside the preferable range of the present invention. | | | | | | | | | | |

In the Outside-range-example 1, as a result of the sheet thickness of the outer panel 3 being very large, although the panel rigidity and the dent resistance were secured, the weight was heavy and the evaluation of the weight ratio was "△", and hence the overall evaluation was "0". In the Outside-range-example 2, the distance between the centers of the units was more than 200 mm, the support span of the outer panel 3 supported by the inner panel 2 was long, and the evaluation of the panel rigidity was "△", and hence the overall evaluation was "0". In each of the Outside-range-examples 3 and 4, the yield strength was less than 400 MPa, and as a result the evaluation of the dent resistance was "△", and hence the overall evaluation was "0". In the Outside-range-example 5, the sheet thickness of the outer panel 3 was 0.7 mm which made the automobile panel heavy, and the evaluation of the weight ratio was "△", and hence the overall evaluation was "○". In the Outside-range-example 6, the sheet thickness of the inner panel 2 was 0.55 mm which made the automobile panel heavy, and the evaluation of the weight ratio was "△", and hence the overall evaluation was "0". Thus, it was found that even just a slight difference in the sheet thickness caused the weight of the automobile panel to change significantly. In the Outside-range-examples 7 and 8, the distance between the centers of the units was more than 200 mm, the support span of the outer panel 3 supported by the inner panel 2 was long, and the evaluation of the panel rigidity was "△", and hence the overall evaluation was "○".

On the other hand, in the Within-range-examples 1 to 11, since the evaluation of the panel rigidity, the dent resistance, and the weight ratio were all "0" or "⊙", the overall evaluation was "⊙".

### <Regarding fact that there is no difference in overall evaluation depending on whether units are hexagonal, circular, or rectangular>

Note that, with regard to the Within-range-examples 3, 7, and 10, although there was a difference between these examples with respect to the shapes of the units, which were hexagonal, circular, or rectangular, apart from this difference the conditions were the same and similar results were obtained. Further, with regard to the Within-range-examples 4, 8, and 11, although there was a difference between these examples with respect to the shapes of the units, which were hexagonal, circular, or rectangular, apart from this difference the conditions were the same and similar results were obtained. In addition, with regard to the Within-range-examples 5 and 9, although there was a difference between these examples with respect to the shapes of the units, which were hexagonal or circular, apart from this difference the conditions were the same and similar results were obtained. Further, with regard to the Outside-range-examples 2, 7, and 8, although there was a difference between these examples with respect to the shapes of the units, which were hexagonal, circular, or rectangular, apart from this difference the conditions were the same and similar results were obtained. Thus, whether the units were hexagonal, circular, or rectangular did not affect the overall evaluation.

Note that, cases where the inner panel 2 is a steel sheet have been described above. However, it is clear that in the Within-range-examples 1 to 11 in which the inner panel 2 is a steel sheet and the sheet thickness is 0.4 mm to 0.55 mm, the same results are obtained as in a case where the inner panel 2 is an aluminum sheet and the sheet thickness is 0.65 mm to 0.80 mm. That is, it is clear that, from the viewpoint of the panel rigidity and the dent resistance, even in a case where the inner panel 2 and the outer panel 3 are aluminum sheets, by setting equivalent sheet thicknesses to a case where the inner panel 2 and the outer panel 3 are steel sheets, the same results as the results described for the Within-range-examples 1 to 11 and Outside-range-examples 1 to 8 will be obtained.

### INDUSTRIAL APPLICABILITY

The present invention can be widely applied as an automobile panel and as a method for producing the automobile panel.

### REFERENCE SIGNS LIST

- 1: Automobile Hood (Automobile Panel)
- 2: Inner Panel
- 3: Outer Panel
- 8: Incomplete Unit (Unit)
- 9: Unit
- 11: Flange
- 12: Inclined Wall
- 13: Bottom Portion
- 20: Joint
- 30, 30B: Applicator
- 33: Nozzle
- L1: Distance Between Centers of Annular unit with joints
- P1, 11A, P1B: Predetermined Pattern
- P2, 12A, P2B: Partial Pattern (one part of predetermined pattern)
- X: Cross Direction (first direction, rectilinear direction)
- Y: Longitudinal Direction (second direction, rectilinear direction)
- C: Oblique direction (third direction, rectilinear direction)

## Claims

1. An automobile panel, comprising:
an outer panel,
an inner panel, and
a j oint that joins the inner panel and the outer panel;
wherein:
the inner panel includes units which, as viewed in a sheet thickness direction of the outer panel, are arranged in plurality in an aligned relationship in a predetermined first direction and are arranged in plurality in an aligned relationship in a second direction that intersects the first direction;
each of the units includes a flange which is arranged adjacent to the outer panel, an inclined wall that extends from the flange so as to separate from the outer panel, and a bottom portion that is continuous with the inclined wall and is separated from the flange;
the plurality of units include a plurality of j oint-equipped units in which the joint is provided at the flange;
a predetermined first form or second form is provided;
in the first form, in some of the j oint-equipped units the joints are arranged in an arrangement including a predetermined pattern, and in a remainder of the j oint-equipped units the joints are arranged in an arrangement including a part of the predetermined pattern; and
in the second form, in each of the joint-equipped units, a plurality of the joints are arranged in an arrangement including the predetermined pattern.

2. The automobile panel according to claim 1, wherein:
the plurality of units include a plurality of units including the flanges which have an identical or similar shape to each other.

3. The automobile panel according to claim 1 or claim 2, wherein:
the predetermined pattern is set to a same size in each of a plurality of the joint-equipped units.

4. The automobile panel according to any one of claim 1 to claim 3, wherein:
in the first form, at least one of a part of the predetermined pattern and the predetermined pattern is arranged in an aligned relationship in a rectilinear direction; and
in the second form, the predetermined pattern is arranged in an aligned relationship in the rectilinear direction.

5. The automobile panel according to any one of claim 1 to claim 4, wherein:
the rectilinear direction is at least one of the first direction, the second direction, and a third direction that intersects with both of the first direction and the second direction.

6. The automobile panel according to any one of claim 1 to claim 5, wherein:
as the joint-equipped unit, an additional-joint-equipped unit having, in addition to one part of the predetermined pattern or the predetermined pattern, the joint that is arranged at a place that deviates from a layout of the joints in the predetermined pattern is provided.

7. The automobile panel according to any one of claim 1 to claim 6, wherein:
the predetermined pattern is a dotted pattern having three or more dots.

8. The automobile panel according to any one of claim 1 to claim 6, wherein:
the predetermined pattern is a linear pattern having three or more lines.

9. The automobile panel according to any one of claim 1 to claim 8, wherein:
15 or more of the predetermined patterns are provided.

10. The automobile panel according to any one of claim 1 to claim 9, wherein:
the j oint-equipped units include an annular unit with joints in which the joint is provided at the flange which is formed in an annular shape as viewed in the sheet thickness direction;
the annular unit with joints is provided in plurality; and
a distance between centers as viewed in the sheet thickness direction of two of the annular units with joints that are adjacent to each other is 200 mm or less.

11. The automobile panel according to any one of claim 1 to claim 10, wherein:
the outer panel is a steel sheet having a sheet thickness of 0.60 mm or less and an ultimate yield stress of 400 MPa or more, and
the inner panel is a steel sheet having a sheet thickness of 0.50 mm or less.

12. The automobile panel according to any one of claim 1 to claim 10, wherein:
the outer panel is an aluminum sheet having a sheet thickness of 0.75 mm or less, and
the inner panel is an aluminum sheet having a sheet thickness of 0.75 mm or less.

13. A method for producing an automobile panel, comprising:
when applying an adhesive to serve as a joint for joining an outer panel and an inner panel to an application target including at least one of the outer panel and the inner panel, applying the adhesive to the application target using an applicator including a plurality of nozzles arranged in an arrangement including at least one part of a predetermined pattern;
the plurality of nozzles being configured to be individually capable of switching supply of the adhesive on and off, and
applying the adhesive in an arrangement including at least one part of the predetermined pattern to the application target by supplying the adhesive from all of the nozzles simultaneously, or applying the adhesive in an arrangement that is one part of the predetermined pattern to the application target by supplying the adhesive from a part of the nozzles.

14. The method for producing an automobile panel according to claim 13, comprising:
applying the adhesive to a plurality of places on the application target while causing the plurality of nozzles to reciprocate with respect to the application target.

15. The method for producing an automobile panel according to claim 13 or claim 14, wherein:
the adhesive is applied in a state in which relative positions of the plurality of nozzles are fixed.

16. The method for producing an automobile panel according to any one of claim 13 to claim 15, comprising:
applying the adhesive while moving the plurality of nozzles in a rectilinear direction.

17. The method for producing an automobile panel according to claim 16, wherein:
the inner panel includes units which are arranged in plurality in an aligned relationship in a predetermined first direction as viewed in a sheet thickness direction of the outer panel and which are arranged in plurality in an aligned relationship in a second direction that intersects with the first direction; and
the rectilinear direction is at least one of the first direction, the second direction, and a third direction that intersects with both of the first direction and the second direction.

18. The method for producing an automobile panel according to any one of claim 13 to claim 17, comprising:
in a process that is prior to or a process that is after an application process in which the adhesive is applied in an arrangement including at least one part of the predetermined pattern to the application target by supplying the adhesive from all of the nozzles simultaneously or the adhesive is applied in an arrangement that is one part of the predetermined pattern to the application target by supplying the adhesive from a part of the nozzles, applying the adhesive at a place that deviates from a layout of the adhesive in the predetermined pattern.

19. The method for producing an automobile panel according to any one of claim 13 to claim 18, wherein:
the adhesive is supplied to the application target while moving a plurality of the nozzles by an interval that is shorter than an interval between a plurality of the nozzles.
